(19) **Europäisches Patentamt / European Patent Office / Office européen des brevets**

(11) **EP 3 865 545 B1**

(12) # EUROPÄISCHE PATENTSCHRIFT

(45) Veröffentlichungstag und Bekanntmachung des Hinweises auf die Patenterteilung:
**10.11.2021 Patentblatt 2021/45**

(51) Int Cl.:
***C09D 5/00*** *(2006.01)*

(21) Anmeldenummer: **20157149.4**

(22) Anmeldetag: **13.02.2020**

(54) **KORROSIONSSCHUTZ-ZUSAMMENSETZUNG**

CORROSION PROTECTION COMPOSITION

COMPOSITION DE PROTECTION CONTRE LA CORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.08.2021 Patentblatt 2021/33**

(73) Patentinhaber: **FRAUNHOFER-GESELLSCHAFT zur Förderung der angewandten Forschung e.V. 80686 München (DE)**

(72) Erfinder:
• **KOLARIC, Ivica 73728 Esslingen (DE)**

• **GLANZ, Carsten 71144 Steinenbronn (DE)**
• **ENTENMANN, Marc 70734 Fellbach (DE)**
• **GREISIGER, Heinz 72762 Reutlingen (DE)**
• **LEHMANN, Henry 71263 Weil der Stadt (DE)**
• **ZIHAREVA, Irina 71229 Leonberg (DE)**

(74) Vertreter: **Richardt Patentanwälte PartG mbB Wilhelmstraße 7 65185 Wiesbaden (DE)**

(56) Entgegenhaltungen:
**US-A1- 2014 151 596**

EP 3 865 545 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Korrosionsschutz-Zusammensetzung zur Beschichtung von Oberflächen, einen entsprechenden Schichtaufbau mit einer solchen Korrosionsschutz-Zusammensetzung, die Verwendung dieses Schichtaufbaus zur Korrosionsschutz-Beschichtung einer Oberfläche, ein Korrosionsüberwachungssystem, ein Korrosionsschutzsystem und ein Verfahren zur Beschichtung einer gegen Korrosion zu schützenden Oberfläche.

Korrosion von metallischen Bauteilen führt jährlich zu enormen volkswirtschaftlichen Schäden, die vermieden werden wollen. Aus diesem Grund gibt es Maßnahmen, welche die Korrosionsbeständigkeit von Metallen erhöhen, um somit die Geschwindigkeit des korrosiven Angriffs so weit zu verringern, dass eine Beschädigung des entsprechenden Bauteils während seiner Lebensdauer vermieden werden kann. Der sogenannte passive Korrosionsschutz umfasst alle Maßnahmen, welche eine gegen korrosive Medien abschirmende Wirkung zum Beispiel durch einen geeigneten Überzug oder eine Beschichtung des zu schützenden Werkstoffs bewirkt. Der aktive kathodische Korrosionsschutz arbeitet wahlweise mit oder ohne Fremdstrom und basiert darauf, das Potenzial des zu schützenden Metalls so zu verändern, dass dieses nicht korrelieren kann.

Beispielsweise offenbart die EP 1 756 236 B1 eine elektrisch leitfähige und schweißbare, im Wesentlichen lösemittelfreie Korrosionsschutz-Zusammensetzung zur Beschichtung von Metalloberflächen. Aus der EP 1 337 350 B2 ist ferner eine farb- und/oder effektgebende Mehrschichtlackierung, ein Verfahren zu ihrer Herstellung und ihre Verwendung bekannt.

Die US 2014 / 0 151 596 A1 offenbart eine wärmeleitende, korrosionsbeständige Beschichtungszusammensetzung zur Verwendung als Substratbeschichtung. Die Zusammensetzung umfasst ein Polyurethanpolymer auf Wasserbasis und mindestens ein Additiv. Die Zusammensetzung kann ebenfalls wärmeleitende Partikel umfassen, bei denen es sich um Kohlenstoff-Nanoplättchen und -Nanoröhrchen handeln kann. Die Zusammensetzung kann die Urethankomponente mit 25 — 75 Gewichtsprozent sowie die Kohlenstoff-Nanomaterialkomponente mit 4 — 10 Gewichtsprozent enthalten. Die Zusammensetzung kann als zusätzliche Komponenten ein silanbasiertes Vernetzungsmittel und / oder ein etherbasiertes Koaleszenzmittel enthalten.

Der Erfindung liegt die Aufgabe zugrunde, eine verbesserte Korrosionsschutz-Zusammensetzung, einen verbesserten Schichtaufbau umfassend eine solche Korrosionsschutz-Zusammensetzung, ein Korrosionsüberwachungssystem, ein Korrosionsschutzsystem und ein Verfahren zur Beschichtung einer gegen Korrosion zu schützenden Oberfläche bereitzustellen. Die der Erfindung zugrunde liegenden Aufgaben werden durch die Merkmale der unabhängigen Patentansprüche gelöst. Ausführungsformen der Erfindung sind in den abhängigen Patentansprüchen angegeben.

Es wird eine Korrosionsschutz-Zusammensetzung zur Beschichtung von Oberflächen angegeben, wobei die Zusammensetzung eine erste und eine zweite Füllkomponente aufweist, wobei bezogen auf die Gesamtzusammensetzung das Gewichtsverhältnis der ersten Füllkomponente und der zweiten Füllkomponente zwischen 0,4 und 1,2 liegt, wobei

- die erste Füllkomponente Kohlenstoffplättchen "Platelets" und eine (elektrisch leitfähige) Nanostrukturkomponente aufweist, wobei die Nanostrukturkomponente ausgewählt ist aus der Gruppe der Nanoröhren, Nanodrähte und Nanofasern,
- die zweite Füllkomponente eine Polymermatrix aufweist.

Der Begriff der Polymermatrix versteht sich als jene Matrix, in welche im ausgehärteten Zustand die erste Füllkomponente vorzugsweise homogen eingebettet ist. Polymermatrix und erste Füllkomponente ergeben also einen Verbundwerkstoff, sodass die Korrosionsschutz-Zusammensetzung auch als Verbundwerkstoff bezeichnet werden kann.

Die Polymermatrix kann nebst dem Bindemittel und einem optionalen Härter auch Dispersionsmittel enthalten. Da jedoch das Dispersionsmittel nicht mitvernetzt wird, wurde dieses grundsätzlich bei den Gewichtsangaben (Gewichtsverhältnis erste Füllkomponente zu zweiter Füllkomponente) nicht berücksichtigt. Insofern versteht im Rahmen der gesamten vorliegenden Offenbarung der Begriff der zweiten Füllkomponente grundsätzlich nur als eine Kombination von Harz und (sofern vorhanden) Härter, welche gemeinsam im ausgehärteten Zustand die Polymermatrix bilden. Die entsprechend hierzu notwendigen chemischen Härtungsmittel sind Reaktionspartner und bilden zusammen mit dem Reaktionsharz den makromolekularen Kunststoff, also die Polymermatrix für die erste Füllkomponente.

Ausführungsformen der Erfindung könnten den Vorteil haben, dass der Korrosionsschutz von Oberflächen, insbesondere Metalloberflächen, verbessert wird. Einerseits könnten die Kohlenstoffplättchen dafür sorgen, dass diese aufgrund ihrer Hydrophobie eine Flüssigkeitsbarriere bilden, sodass wässrige Substanzen wie beispielsweise Wasser selbst oder auch Laugen gar nicht erst in Kontakt mit der zu schützenden Metalloberfläche gelangen können. Die Nanostrukturkomponente wiederum könnte dafür sorgen, dass aufgrund derer elektrischer Leitfähigkeit im Metall vorhandene Elektronen vom Metall weggeleitet werden. Die Elektronen sind zum Beispiel ein Resultat der Diffusion von positiv geladenen Metallionen in die wässrige Umgebung, sollte trotz der Kohlenstoffplättchen Flüssigkeit wie zum Beispiel Wasser an die Metalloberfläche gelangt sein. Das so durch die Nanostrukturkomponente abgegriffene Elektron kann somit von der Metalloberfläche wegtransportiert werden und an anderer Stelle mit Wasser und Sauerstoff zu Hydroxidionen reagieren.

Tritt an einem gewöhnlichen Lackaufbau eine Verletzung bis zum Metallsubtrat auf, bilden sich Korrosionsprodukte an dieser Stelle und die Sauerstoffentladung wandert an deren Randbereiche. Es an dieser Stelle angemerkt, dass das im vorliegenden Fall entstehende Hydroxidion mit der Polymermatrix der zweiten Füllkomponente reagieren kann, wobei hierdurch langfristig die Polymermatrix zerstört werden könnte. Dieser Prozess der Unterwandung generiert eine freiliegende unbeschichtete Metalloberfläche und wird auch als "kathodische Delamination" bezeichnet. Bei richtiger Wahl der Kohlenstoffplättchen und der Nanostrukturkomponente kann nun die kathodische Delamination unterdrückt und an die Oberfläche dieser Schicht verlagert werden. Die Metalloberfläche bleibt so mit einer Beschichtung weitgehend vor Korrosion geschützt, allerdings muss die darüber liegende Beschichtung gegebenenfalls von Zeit zu Zeit, je nach Korrosionsdruck, erneuert werden. Allerdings sollte es einfacher und auch nachhaltiger sein bei Auftreten von Korrosion den Decklack zu erneuern, als bei kathodisch delaminierten Beschichtungen den Versuch zu unternehmen, die beanspruchten Bereiche abzuschleifen und mit Reparaturlacken neu zu beschichten.

Im Ergebnis entstehen also z.B. Hydroxidionen — wenn überhaupt — in minimierter Form entfernt vom Metall, sodass der Ort der Metallionenbildung getrennt wird vom Ort der Hydroxidionenbildung. Damit trennen sich anodischer und kathodischer Effekt.

Nach einer Ausführungsform liegt das Gewichtsverhältnis der Nanostrukturkomponente und dem Kohlenstoffplättchen zwischen 2 und 4, insbesondere zwischen größer als 3 und kleiner als 4. Das Gewichtsverhältnis der ersten Füllkomponente und der zweiten Füllkomponente kann insbesondere zwischen 0,5 und 1 und bevorzugt zwischen 0,65 und 0,8 liegen. Das besagte Gewichtsverhältnis der Nanostruktur-komponente und den Kohlenstoffplättchen könnte deshalb vorteilhaft sein, weil hier ein optimaler Kompromiss zwischen dem Flüssigkeitsbarriereeffekt der Kohlenstoffplättchen und der Erhöhung der elektrischen Leitfähigkeit durch die Nanostruktur-komponente erzielt werden kann. Die Kohlenstoffplättchen verlängern die Diffusionswege der Flüssigkeitsmoleküle, da aufgrund der Hydrophobie und der Kompaktheit die Flüssigkeitsmoleküle um die Kohlenstoffplättchen wandern müssen, um überhaupt erst zur Metalloberfläche zu gelangen. Ein zu hoher Anteil von Kohlenstoffplättchen minimiert jedoch die elektrische Leitfähigkeit sodass für den Fall, dass doch Flüssigkeitsmoleküle an die Metalloberfläche diffundieren könnten, keine zügige Ableitung der bei der anschließenden Entstehung von Metallionen ebenfalls entstehenden Elektronen von der Metalloberfläche weg stattfindet. Im Ergebnis bedeutet dies, dass Hydroxidionen nahe der Metalloberfläche entstehen würden, woraus schlussendlich kathodische Delamination unter Bildung einer freien Metalloberfläche resultiert.

Andererseits könnte ein erhöhter Anteil an der elektrisch leitfähigen Nanostruktur-komponente zwar für einen raschen Abtransport der entstehenden Elektronen weg von der Metalloberfläche sorgen, wobei jedoch mangels Barriereeigenschaften (z.B. Hydrophobie) der elektrisch leitfähigen Nanostrukturkomponente sehr viele Flüssigkeitsmoleküle an die Metalloberfläche diffundieren könnten. Das besagte Gewichtsverhältnis von Nanostrukturkomponente und Kohlenstoffplättchen könnte hier für einen optimalen Kompromiss sorgen, bei dem einerseits eine Flüssigkeitsbarriere in ausreichend hoher Form gegeben ist und andererseits im Falle der Diffusion von Flüssigkeitsmolekülen an der Metalloberfläche ein ausreichend rascher Abtransport der Elektronen von der Metalloberfläche weg gewährleistet ist.

Es sei an dieser Stelle angemerkt, die Verwendung von möglichst leitfähigen Graphen-Plättchen in Beschichtungsformulierungen zum Korrosionsschutz von Metallen insbesondere in niedrigen Konzentrationsbereichen zwischen z.B. 0,001 Gew.-% und 0,15 Gew.-% für einen Korrosionsschutz negativ scheint. Ein hierauf etwaig abgestellter "Korrosionsschutz" müsste zum einen auf die durch leitfähiges Graphen katalysierte Bildung dickerer Metalloxidschichten auf der Metalloberfläche, zum anderen auf einer Sauerstoff- und Wasser-Barriere Funktion, als auch auf einer Verminderung des Wasserspeichervermögens infolge der Vergrößerung der Hydrophobie basieren. Nachteile wären in diesem Fall zum einen direkte interpartikuläre Graphen-Plättchen Kontakte, als auch direkte Kontakte der Graphen-Komponente zur Metalloberfläche, da diese im Fall möglichst leitfähiger Graphen-Plättchen bei den besagten Konzentrationsbereichen, die Korrosion des Metallsubstrats beschleunigen würden.

Durch die sorgfältige Wahl der obig beschriebenen Bereiche der Gewichtsverhältnisse (Nanostrukturkomponente und Kohlenstoffplättchen, sowie erster und zweiter Füllkomponente) sollten sich beschleunigte Korrosionseffekte für Metallsubstrate bei Einsatz der beschriebenen "höheren" Konzentrationen von Graphen oder Nanostrukturkomponente bzw. deren Mischungen nicht nur vermeiden lassen, sondern günstige Korrosionsschutzeffekte erzeugt werden, indem über die Konzentrationsverhältnisse und damit die Gewichtsverhältnisse der Zutritt von Wasser- und Sauerstoff zur Metalloberfläche und damit die Korrosionsrate in einem bestimmten Verhältnis zur Leitfähigkeit der Schicht einjustiert werden. Ist dies gewährleistet, so können die durch Korrosionsprozesse generierten Elektronen von der Metalloberfläche in die Primerbeschichtung abgeleitet werden, so dass die Sauerstoffentladung und Erzeugung der kathodische Delamination verursachenden Hydroxidionen sich ebenfalls von der Metalloberfläche weg in diese Primerschicht verlagert. Die Bildung einer blanken freien Metalloberfläche durch kathodische Delamination und damit der sich immer stärker beschleunigende Zutritt von Wasser und Sauerstoff werden damit weitgehend unterbunden. Würde die Leitfähigkeit der Schicht hingegen zu hoch eingestellt, so tritt hier ebenfalls der stark nachteilige Effekt der beschleunigten Korrosion des Metallsubstrats auf.

Diese obenstehend beschriebenen neuartigen Korrosionsschutzaspekte lassen sich z.B. durch die vorliegende beschriebene Primerschicht realisieren, indem zum einen nur Mischungen aus erster und zweiter Füllkomponente mit den beschriebenen Oberflächenmodifizierungen, in definierten Verhältnissen und entsprechend hohen Einsatzkonzentrationen, notwendig zur Erzeugung einer möglichst hohen Barrierewirkung gegenüber Wasser- und Sauerstoff, zum Einsatz kommen. Hierbei sollte ein Kontakt der Graphen- und Nanostruktur-Komponenten zur schützenden Metalloberfläche für die Ableitung der durch Korrosion gebildeten Elektronen hilfreich sein.

Nach einer Ausführungsform der Erfindung handelt es sich bei der Nanostruktur-komponente um eine Kohlenstoff-Nanostrukturkomponente, wobei die Kohlenstoff-Nanostrukturkomponente ausgewählt ist aus der Gruppe von ein oder mehrwandigen Kohlenstoff-Nanoröhren, Kohlenstoff-Nanodrähten und Kohlenstoff-Nanofasern.

Nach einer Ausführungsform der Erfindung handelt es sich bei den Kohlenstoffplättchen um Graphenplatelets, wobei insbesondere deren durchschnittliche Dicke zwischen 1 nm und 30 nm oder zwischen 1 nm und 15 nm beträgt und/oder deren durchschnittlicher Äquivalentdurchmesser zwischen 0,2 $\mu$m und 200 $\mu$m, insbesondere zwischen 0,5 $\mu$m und 20 $\mu$m oder zwischen 0,5 $\mu$m und 10 $\mu$m oder zwischen 0,5 $\mu$m und 5 $\mu$m beträgt.

Unter dem geometrischen Äquivalentdurchmesser versteht man die Bestimmung des Durchmessers eines Kreises mit gleicher geometrischer Eigenschaft (Oberfläche) wie die besagten Kohlenstoffplättchen, welche typischerweise unregelmäßig geformt sind. Graphenplatelets sind aus dem Stand der Technik als solche bekannt und bestehen aus Stapeln von Graphenschichten, wobei je nach Anzahl der Schichten die entsprechende besagte Dicke resultiert. Die genannten Werte bezüglich der durchschnittlichen Dicke und dem durchschnittlichen geometrischen Äquivalentdurchmesser können dabei einen optimalen Kompromiss zwischen mechanischer Stabilität bei der Verarbeitung zur Herstellung der Korrosionsschutz-Zusammensetzung und den insgesamt hydrophoben sowie insbesondere Barriere-Eigenschaften im Endprodukt der Korrosionsschutz-Zusammensetzung darstellen. Sind die Graphenplatelets zu dick und zu klein, ergeben sich trotz hoher mechanischer Stabilität bei der Verarbeitung im Endprodukt geringere Barriereeigenschaften, sodass trotz der Hydrophobie der Graphenplatelets im Endeffekt die Barrierewirkung gegenüber Wasser der Korrosionsschutz-Zusammensetzung nicht in ausreichendem Maß gegeben ist. Außerdem würde aufgrund der hohen Dicke das Partikelanzahlverhältnis bezogen der Anteil der Nanoröhren zu gering ausfallen, sodass die elektrische Leitfähigkeit der Korrosionsschutz-Zusammensetzung nicht ausreichend wäre.

Umgekehrt könnten großflächige Graphenplatelets zu einer hohen Hydrophobie und Barrierewirkung der Korrosionsschutz-Zusammensetzung führen, wobei jedoch dann im Fall zu dünner Platelets bei der Verarbeitung eine mechanische Zerstörung derselben stattfinden könnte, sodass die eigentlich aufgrund der Großflächigkeit garantierte Hydrophobie des Gesamtsystems wiederum abnimmt. Im Fall zu großflächiger Platelets könnte außerdem die möglichst gleichmäßige und homogene Durchsetzung der Korrosionsschutz-Zusammensetzung mit der Nanostrukturkomponente nicht mehr möglich sein, da in diesem Fall übertrieben gesprochen die zu schützenden Oberfläche mit großflächigen Platelets bedeckt ist. Ferner üben bei gleichem Massenanteil, dünnere (aufgrund höherer Partikelanzahl) und größere Graphenplättchen (geringere Perkolationskonzentration) einen stärkeren Einfluss auf die Leitfähigkeit der Beschichtung aus, so dass diese nicht mehr zum großen Teil durch die Nanostrukturkomponente bestimmt und damit schwieriger einstellbar, bzw. optimierbar wird.

Vorzugsweise dient die Nanostrukturkomponente der Ausbildung eines elektrisch perkolierenden Netzwerks. Weist die Nanostrukturkomponente beispielsweise stäbchenförmige elektrische Leiter auf, so ist das Ziel die elektrische Perkolation in Netzwerken aus den stäbchenförmigen elektrischen Leitern. Ist im obigen speziellen Beispiel die zu schützende Oberfläche mit großflächigen Platelets bedeckt, so kann aber von einer bevorzugt gleichmäßigen und/oder homogenen und/oder perkolierenden Verteilung der Nanostrukturkomponente nicht mehr die Rede sein, da es in diesem Fall große durch die Platelets gebildete Bereiche gibt, um welche sich das Netzwerk der Nanostrukturkomponente herum erstrecken muss. Das besagte Gewichtsverhältnis der Nanostrukturkomponente und den Kohlenstoffplättchen trägt all dem Rechnung und stellt einen Bereich zur Verfügung, welcher für einen optimalen Korrosionsschutz sorgt.

Nach einer Ausführungsform der Erfindung beträgt das durchschnittliche Aspektverhältnis der Nanostrukturkomponente zwischen 50 und 1500, insbesondere zwischen 50 und 500 oder 70 bis 200 oder 100 bis 200. Dies könnte den Vorteil haben, dass hierdurch die Leitfähigkeit der Korrosionsschutz-Zusammensetzung bei einem gegebenen Massenanteil der Nanostrukturkomponente maximiert wird. Im Beispiel der Kohlenstoff-Nanoröhren gesprochen könnten zu kurze Nanoröhren bei gegebenem Massenanteil insgesamt die Leitfähigkeit reduzieren, zu dünne Nanoröhren könnten bei der Verarbeitung (z.B. im Rahmen einer Ultraschalldispergierung) zu leicht brechen, sodass hieraus ebenfalls wieder zu kurze Nanoröhren resultieren würden. Zu dicke Nanoröhren hingegen würden aufgrund der Materialzunahme bei gegebenem Gewichtsverhältnis zwischen Nanostrukturkomponente und Kohlenstoffplättchen die Gesamtleitfähigkeit ebenfalls reduzieren, da in diesem Fall die Gesamtanzahl an einzelnen Röhren reduziert ist und damit die Anzahl der einzelnen Leitungswege beschränkt ist.

Nach einer Ausführungsform der Erfindung umfasst die zweite Füllkomponente Partikel einer aktiven Korrosionsschutzkomponente, wobei der Anteil der Partikel zwischen 0,1 und 0,75 Gew.-% bezogen auf die Gesamtzusammensetzung beträgt, insbesondere zwischen 0,2 und 0,6 und besonders bevorzugt zwischen 0,3 und 0,5 Gew.-% bezogen auf die Gesamtzusammensetzung. Die aktive Korrosionsschutzkomponente könnte dafür sorgen, dass sich im Fall einer etwaig stattfindenden Korrosion eine kompakte Metalloxid-haltige Schicht über dem Metallsubstrat ausbildet, welche den Zutritt von Wasser und Sauerstoff zur Metallsubstratoberfläche blockiert, welchen jedoch auch das Herauslösen weiterer Metallionen aus der Substratoberfläche blockiert. Experimente haben überraschend ergeben, dass der besagte Bereich des Gewichtsanteils der Partikel der aktiven Korrosionsschutzkomponente eine Verbesserung der Korrosionsschutzeigenschaften der Korrosionsschutz-Zusammensetzung ergibt. Dieser für den anodischen Korrosionsprozess wichtige Aspekt scheint somit parallel zu dem Schutz vor kathodischer Delamination aufzutreten, so dass sich beide Aspekte in Bezug auf eine verbesserte Korrosionsschutzwirkung sinnvoll synergistisch zu ergänzen scheinen. Zu viel Material der aktiven Korrosionsschutzkomponente verschlechtert die Korrosionsschutzeigenschaften der Zusammensetzung und zu wenig Material trägt zu keiner Verbesserung der Korrosionsschutzeigenschaften bei, weshalb auch hier bestimmte und definierte Konzentrationsbereiche zum Erreichen eines möglichst großen Korrosionsschutzes innerhalb des vorgestellten Gesamtkonzepts, eingehalten werden sollten.

Nach einer Ausführungsform der Erfindung ist die aktive Korrosionsschutzkomponente ausgewählt aus der Gruppe von Phosphaten und Orthophosphaten und deren Derivaten, insbesondere aus der Gruppe der Phosphate und Orthophosphate und deren Derivate, welche auf Calcium, Zink und Strontium basieren.

Nach einer Ausführungsform der Erfindung ist die aktive Korrosionsschutzkomponente ausgewählt aus der Gruppe und deren Derivate von Calciumphosphat, Calciumorthophosphat, Calciumaluminiumorthophosphat, Calcium- magnesiumorthophosphat, Strontiumaluminiumpolyphosphat, Strontiumaluminiumpolyphosphat, Zinkphosphat, Zinkor- thophosphat, Zinkaluminiumpolyphosphat, Zinkmolybdenorthophosphat, Zinkaluminiumorthophosphat.

Erfindungsgemäß weisen die Kohlenstoffplättchen und/oder die Kohlenstoff-Nanostrukturkomponente eine Silan-Funktionalisierung auf, wobei der Funktionalisierungsgrad 5 % bis 90 %, insbesondere 10 % bis 60 % und weiterhin bevorzugt 20 % bis 40 % beträgt. Alternativ oder zusätzlich weisen die Kohlenstoffplättchen und/oder die Kohlenstoff- Nanostrukturkomponente eine Polyether-Funktionalisierung auf, wobei der Funktionalisierungsgrad 5 bis 90 %, insbesondere 10 bis 60 % und weiterhin bevorzugt 20 bis 40 % beträgt. Allgemein kann der Funktionalisierungsgrad zum Beispiel unter Verwendung von TGA (thermogravimetrische Analyse) bestimmt werden. Die Bestimmung des Funktionalisierungsgrades ist aus dem Stand der Technik bekannt.

Die Silankomponente kann ausgewählt sein aus einer olefinisch reaktiven Silankomponente, insbesondere Vinyltrimethoxysilan, 3-Methacryloxypropyltrimethoxysilan, oder einer epoxid-funktionellen Silankomponente, insbesondere 3-Glycidyloxypropyltrimethoxysilan und deren Mischungen.

Insbesondere die Polyether-Funktionalisierung könnte den Vorteil haben, dass hierdurch die Oberflächen der Kohlenstoffplättchen und/oder der Kohlenstoff-Nanostrukturkomponente besser im Hinblick auf die zweite Füllkomponente benetzbar wird. Insofern lässt sich die erste Füllkomponente mit weniger Energieaufwand und auch feinteiliger in die zweite Füllkomponente eindispergieren, ohne dass hierzu weitere Fremdpolymere notwendig sind, die im Endeffekt die finale Korrosionsschutz-Zusammensetzung, infolge einer weniger kompakten, weicheren Polymermatrixstruktur und damit verbunden einer geringeren Barriereeigenschaft gegenüber Wasser und Sauerstoff, als auch gegenüber Elektrolyten, schwächen würden. Dies könnte wiederum bedeuten, dass durch die Funktionalisierung sich also die mechanische Stabilität und Widerstandsfähigkeit gegen das Eindringen von Flüssigkeitsmolekülen und die kathodische Delamination durch die Möglichkeit des Verzichtens auf weitere Fremdpolymere zur Erhöhung der Oberflächenbenetzbarkeit der ersten Füllkomponente verbessern könnte.

Für nicht funktionalisierte bzw. nicht oberflächenmodifizierte Kohlenstoffplättchen/ Nanostruktur-komponente- Mischungen wird das Verhältnis der Wasser- und Sauerstoffbarriere zur Leitfähigkeit im Wesentlichen durch die Verhältnisse und Konzentrationen beider Kohlenstoffkomponenten bestimmt. Wird nun eine Oberflächenmodifizierung mit Silan- und/oder bestimmten Polyetherkomponenten durchgeführt so lässt sich je nach Modifizierungshöhe und Silan-/Polyetherkomponenten Verhältnis die Leitfähigkeit der Partikel und damit der resultierenden Primerschicht steuern, ohne jedoch deren Barriereeigenschaften wesentlich zu beeinflussen. Ein weiterer Vorteil einer Oberflächenmodifizierung der Kohlenstoffplättchen/ Nanostruktur-komponente-Mischung könnte in der verbesserten Kompatibilität mit der Bindemittelmatrix liegen, was sich in einer homogeneren Primerschicht, ohne Bildung von Agglomeraten und der Vermeidung von größeren Mengen an Dispergier- und Stabilisierungsadditiven, äußert. Beide Aspekte könnten wiederum zu einer kompakteren Schicht führen, mit einer bezüglich Korrosionsschutz günstigen vergrößerten Wasser- und Sauerstoff- Barriere. Aufgrund der angeführten Aspekte ist die Verwendung geeignet oberflächenmodifizierter Kohlenstoffplättchen/ Nanostruktur-komponente-Mischungen, sowie die Optimierung der Leitfähigkeit, bzw. des Widerstandes der resultierenden erfindungsgemäßen Primerschicht ein positiver Aspekt zur Realisierung des beschriebenen Korrosionsschutz- Konzepts.

Dadurch dass die Primerschicht eine einstellbare Leitfähigkeit aufweist, lässt sie sich auch im Bereich des schweren Korrosionsschutzes anwenden, indem eine Polarisation vorgenommen wird. Durch Verwendung von beispielsweise Impedanzmessungen kann ein Online-Monitoring des Korrosionszustands des Metallsubstrats erfolgen, so dass sich in einer besonders bevorzugten Anwendung des neuartigen Konzepts die Polarisation automatisch zuschaltet, wenn das Online-Monitoring erhöhte Korrosionsprozesse am Metallsubstrat registriert. Damit werden durch das obenstehend beschriebene Konzept selbstregelnde intelligente Korrosionsschutzsysteme kommerziell verfügbar werden.

Nach einer Ausführungsform der Erfindung umfasst die Polymermatrix ein Reaktionsharz, insbesondere ein Reaktionsharz ausgewählt aus der Klasse der Epoxidharze, Polyesterharze und Acrylatharze. Im Ergebnis ergibt sich so eine Korrosionsschutz-Zusammensetzung, deren zweite Füllkomponente aufgrund einer chemischen, optischen oder thermischen Härtung in optimaler Weise mit der ersten Füllkomponente verbunden ist, ja die erste Füllkomponente eingebettet hat. Vorzugsweise wird die Polymermatrix ebenfalls auf die zu beschichtende Metalloberfläche abgestimmt, sodass außerdem eine hervorragende Haftung zwischen Korrosionsschutz-Zusammensetzung und zu schützender Metalloberfläche gegeben ist.

Nach einer Ausführungsform beträgt der spezifische Oberflächenwiderstand der Korrosionsschutz-Zusammensetzung zwischen $10^3$ und $10^6$ Ohm, insbesondere zwischen $10^4$ und $10^5$ Ohm. Insbesondere bei der Verwendung von mehrwandigen Kohlenstoff-Nanoröhren in Kombination mit Graphenplatelets kann das den optimalen Bereich wiederspiegeln, welcher einerseits eine ausreichend hohe Flüssigkeitsbarriere und andererseits eine optimale Ableitung von Elektronen ermöglicht.

In einem weiteren Aspekt betrifft die Erfindung einen Schichtaufbau umfassend eine erste Schicht und eine zweite Schicht, wobei die erste Schicht die Korrosionsschutz-Zusammensetzung wie obig beschrieben aufweist und es sich bei der zweiten Schicht um eine Decklackschicht handelt. Durch die Decklackschicht wird die Schicht der Korrosionsschutz-Zusammensetzung zusätzlich gegen mechanische und Witterungseinflüsse geschützt.

Zum Beispiel weist die erste Schicht eine Schichtdicke zwischen 5 $\mu$m und 60 $\mu$m, insbesondere zwischen 8 $\mu$m und 50 $\mu$m und weiterhin bevorzugt zwischen 50 $\mu$m und 40 $\mu$m auf. Die zweite Schicht kann eine Schichtdicke zwischen 10 $\mu$m und 300 $\mu$m, insbesondere zwischen 20 $\mu$m und 200 $\mu$m und weiterhin bevorzugt zwischen 30 $\mu$m und 100 $\mu$m aufweisen.

Die gewählten Schichtdicken bilden dabei einen optimalen Kompromiss zwischen einerseits gutem Korrosionsschutzvermögen und andererseits dem hierzu getätigten Materialaufwand. Während weiteres Material die Korrosionsschutzeigenschaften des Schichtaufbaus verbessern könnten, besteht die Gefahr, dass es hier bei zu hohen Schichtdicken zu Haftungs- und Verlaufsstörungen kommen könnte. Ab einer bestimmten Mindestschichtdicke der Einzelschichten ist außerdem im Regelfall diese Verbesserung nur im stark beschränkten Maß der Fall und würde in keinem Verhältnis zu den hierzu notwendigen Kosten bezüglich des zusätzlichen Materialaufwandes stehen, der bezüglich der entsprechenden erhöhten Schichtdicke der ersten und/oder zweiten Schicht notwendig wäre.

Nach einer Ausführungsform umfasst die zweite Schicht elektrisch leitfähige Partikel, wobei der spezifische Oberflächenwiderstand der zweiten Schicht zwischen 1 % und 30 % des spezifischen Oberflächenwiderstandes der ersten Schicht beträgt. Dies könnte den Vorteil haben, dass die Elektroden infolge der höheren Leitfähigkeit der zweiten Schicht sofort in diese weitertransportiert werden und dass somit die Ausbildung von zusätzlichen Potentialen zwischen der ersten und zweiten Schicht vermieden wird. Diese Eigenschaft könnte besonders bei Durchführung von Polarisierungen wichtig werden, so dass kein wesentlicher Spannungsabfall zwischen zweiter und erster Schicht entsteht. Die Reduktion von Sauerstoff könnte somit ebenfalls an die Oberfläche der zweiten Schicht verschoben werden.

Nach einer Ausführungsform sind die elektrisch leitfähigen Partikel anorganisch, insbesondere oxidisch, insbesondere ausgewählt aus Indium-, Fluor- und Antimonenthaltenden Zinnoxiden oder deren Mischungen. Dies könnte den Vorteil haben, dass sich infolge des Einbringens inerter leitfähiger Materialien keine Kontaktpotentiale ausbilden, welche selbst Einfluss auf die Korrosionsprozesse nehmen. Besonders bedenklich wäre das Einbringen von Partikeln aus Edelmetallen wie Kupfer oder Silber, da diese die Auflösung des unedleren Substratmetalls wie Eisen, Stahl, Aluminium beim Einwirken von wässrigen Elektrolyten sehr stark beschleunigen könnten. Beim Einbringen von Metallpartikeln, welche unedler als das Substrat sind, wie z.B. Aluminium-/ oder Zinkpartikel bei einem Stahlsubstrat, würden diese wiederum bei wässriger Elektrolyt-Einwirkung bevorzugt korrodieren und sich in Oxide, bzw. Hydroxide umwandeln. Zum einen ginge dann die Leitfähigkeit verloren, zum anderen würde eine betreffende Schicht durch die Bildung der Oxide und Hydroxide hydrophil, was die wiederum die Barrierewirkung gegenüber dem Eindringen von wässrigen Elektrolyten stark abschwächen könnte.

In einem weiteren Aspekt betrifft die Erfindung die Verwendung der obig beschriebenen Korrosionsschutz-Zusammensetzung und insbesondere des beschriebenen Schichtaufbaus zur Korrosionsschutz-Beschichtung einer Oberfläche.

In einem weiteren Aspekt betrifft die Erfindung ein Korrosionsüberwachungssystem, umfassend den obig beschriebenen Schichtaufbau, ein zu überwachendes Material mit einer Oberfläche, wobei die erste Schicht auf der Oberfläche aufgebracht ist, und eine Vorrichtung zur frequenzabhängigen Bestimmung der Impedanz mit mindestens einer Messelektrode und einer Gegenelektrode, wobei eine der beiden Elektroden mit der zweiten Schicht oder der ersten Schicht, die andere der Elektroden mit dem Material kontaktiert ist, wobei weiterhin bevorzugt die Elektrode an der Oberfläche der zweiten Schicht über ein elektrisch leitfähiges Elastomer ohne Verwendung eines Elektrolyten realisiert wird. Das System umfasst ferner eine Impedanz-Messeinheit und / oder Analysator zur Bestimmung der im Schichtaufbau auftretenden Korrosion und/oder Permeation aus der frequenzabhängig bestimmten Impedanz.

Zum Beispiel kann die Vorrichtung zur frequenzabhängigen Bestimmung der Impedanz eine Vielzahl der Messelektroden oder der Gegenelektroden aufweisen, wobei die zweite Schicht in eine Vielzahl von elektrisch zueinander isolierten Domänen aufgeteilt ist, wobei jeder der Domänen mit einer oder mehreren entsprechenden Elektroden der Vielzahl von Elektroden kontaktiert ist, wobei die Auswerteeinheit zur Bestimmung der im Schichtaufbau auftretenden Korrosion aus der frequenzabhängig bestimmten Impedanz spezifisch für jede der Domänen ausgebildet ist.

Allgemein kann die Vorrichtung zur frequenzabhängigen Bestimmung der Impedanz eine Vielzahl der Messelektroden oder der Gegenelektroden aufweisen, wobei diese räumlich voneinander getrennt an verschiedenen Positionen der zweiten Schicht angeordnet sind, wobei die Auswerteeinheit zur — insbesondere bezüglich der zu überwachenden Oberfläche räumlich (flächig) aufgelösten — Bestimmung der im Schichtaufbau auftretenden Korrosion aus der frequenzabhängig bestimmten Impedanz unter spezifischer Verwendung von einer oder mehrerer der Vielzahl der Elektroden ausgebildet ist.

Die zweite Schicht ist, wie oben erwähnt, z.B. in eine Vielzahl von elektrisch zueinander isolierten Domänen aufgeteilt, wobei jeder der Domänen mit einer entsprechenden Elektrode der Vielzahl der Elektroden kontaktiert ist, wobei die Auswerteeinheit zur Bestimmung der im Schichtaufbau auftretenden Korrosion aus der frequenzabhängig bestimmten Impedanz spezifisch für die Domänen ausgebildet ist.

Zunächst könnte ein grundsätzlicher Vorteil des Korrosionsüberwachungssystems darin liegen, dass der Korrosionszustand der zu überwachenden Oberfläche (des zu überwachenden Materials) in einfacher Weise und nichtdestruktiver Weise bestimmt werden kann. Wird nun die frequenzabhängige Bestimmung der Impedanz über eine große elektrisch leitfähig zusammenhängende zweite Schicht durchgeführt, so ergibt sich die Information bezüglich der Korrosion und/oder Permeation als integrale Antwort über die betrachtete Fläche. Dies könnte zumindest einen groben Anhaltspunkt dafür bieten, inwieweit die Korrosion der zu überwachenden Oberfläche fortgeschritten ist.

Wird hingegen die zweite Schicht in die Vielzahl von elektrisch zueinander isolierten Domänen aufgeteilt, so könnte das Messergebnis der frequenzabhängigen Bestimmung der Impedanz eine Information über die tatsächlichen lokalen Korrosionseigenschaften der zu überwachenden Oberfläche bestimmt werden. Lokal meint in diesem Zusammenhang eine durch die Domänen bedingte räumliche Begrenzung des Bereichs, bezüglich welchem die Erfassung der Impedanz erfolgt. Dies könnte den weiteren Vorteil haben, dass eine Beurteilung der stattgefundenen Korrosion lokal so beschränkt werden kann, dass daraufhin ebenfalls lokal sehr beschränkt eine entsprechende Reparatur — falls notwendig — der korrodierten Oberfläche möglich ist. Dieses Prinzip gilt in analoger Weise, wenn einzelne Elektroden oder Elektrodengruppen verwendet werden, welche insbesondere auf einer elektrisch isolierenden Oberfläche angeordnet sind. Jede Elektrode oder Elektrodengruppe kann dabei verwendet werden, um spezifisch für einen räumlich eingegrenzten Bereich der zu überwachenden Oberfläche die Impedanzbestimmung durchzuführen.

Allgemein kann das Korrosionsüberwachungssystem Mittel aufweisen die dafür sorgen, dass nacheinander unterschiedliche der Elektroden oder Gruppen der Elektroden dazu verwendet werden, um die Impedanz zu bestimmen. Im Ergebnis erhält man so räumlich aufgelöst Informationen bezüglich der Korrosion und/oder Permeation der zu überwachenden Oberfläche.

In einem weiteren Aspekt betrifft die Erfindung ferner ein Korrosionsschutzsystem umfassend den obig beschriebenen Schichtaufbau oder die obig beschriebene Korrosionsschutz-Zusammensetzung, eine zu schützende metallische und elektrisch leitfähige Oberfläche, wobei die erste Schicht auf der Oberfläche aufgebracht ist, und eine Polarisationsvorrichtung mit einer ersten und einer zweiten Elektrode, wobei die erste Elektrode mit der Oberfläche und die zweite Elektrode unmittelbar mit der ersten Schicht oder mittelbar mit der ersten Schicht über eine auf der Oberfläche abgewandten Seite der ersten Schicht angeordneten leitfähigen Schicht kontaktiert ist, wobei die Polarisationsvorrichtung dazu ausgebildet ist, mittels der Elektroden die erste Schicht positiv gegenüber der Oberfläche zu polarisieren. Dies entspricht dem Prinzip des aktiven Korrosionsschutzes, wobei aufgrund der Polarisierung die Korrosionsschutzeigenschaften des Schichtaufbaus weiter verstärkt werden.

In einem weiteren Aspekt betrifft die Erfindung ein Verfahren zur Beschichtung einer gegen Korrosion zu schützenden Oberfläche, wobei das Verfahren das Aufbringen der obig beschriebenen Korrosionsschutz-Zusammensetzung als Dispersion auf die zu schützende Oberfläche sowie ein Aushärten der auf der Oberfläche befindlichen Korrosionsschutz-Zusammensetzung umfasst.

Es sei angemerkt, dass die obig beschriebenen Ausführungsformen und Varianten in beliebiger Weise miteinander kombiniert werden können, solange sich solche Kombination nicht gegenseitig ausschließen. Insbesondere offenbart sind die nachfolgende Kombinationen, jeweils in den oben angegebenen Gewichtsbereichen. Bevorzugte Bereiche sind dabei: Gewichtsverhältnis der Nanostrukturkomponente und den Kohlenstoffplättchen zwischen größer als 3 und kleiner als 4; Gewichtsverhältnis der ersten Füllkomponente und der zweiten Füllkomponente zwischen 0,65 und 0,8; durchschnittliche Dicke der Kohlenstoffplatelets als Graphenplatelets zwischen 1nm und 15nm; durchschnittlicher geometrischer Äquivalentdurchmesser der Kohlenstoffplatelets als Graphenplatelets zwischen 0,5$\mu$m und 5$\mu$m; Aspektverhältnis der Nanostrukturkomponente zwischen 100-200; Anteil der Partikel zwischen 0,3 und 0,5 Gewichtsprozent bezogen auf die Gesamtzusammensetzung; Funktionalisierungsgrad der Kohlenstoffplättchen und/oder die Kohlenstoff-Nanostrukturkomponente zwischen 20% und 40%; spezifischer Oberflächenwiderstand der Korrosionsschutz-Zusammensetzung zwischen $10^4$ und $10^5$ Ohm; Schichtdicke der ersten Schicht zwischen 15$\mu$m und 40$\mu$m; Schichtdicke der zweiten Schicht zwischen 30$\mu$m und 100$\mu$m.

Beispielhafte Kombinationen:

Nanodrähte als Nanostrukturkomp., optional mit Calciumaluminiumorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Calciumaluminiumorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Calciumaluminiumorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Calciumaluminiumorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Calciumaluminiumorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Calciumaluminiumorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Calciumaluminiumorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Calciumaluminiumorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Calciumaluminiumorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Calciummagnesiumorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Calciummagnesiumorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Calciummagnesiumorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Calciummagnesiumorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Calciummagnesiumorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Calciummagnesiumorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Calciummagnesiumorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Calciummagnesiumorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Calciummagnesiumorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Calciumorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Calciumorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Calciumorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Calciumorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Calciumorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Calciumorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Calciumorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Calciumorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Calciumorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Calciumphosphat als Korrosionsschutzkomp., Acrylatharze zumindest als Teil der Polymermatrix, mit einer optionalen Polyether-Funktionalisierung; Nanodrähte als Nanostrukturkomp., optional mit Calciumphosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Calciumphosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Calciumphosphat als Korrosionsschutzkomp., Epoxidharz zumindest als Teil der Polymermatrix, mit einer optionalen Polyether-Funktionalisierung; Nanodrähte als Nanostrukturkomp., optional mit Calciumphosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Calciumphosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Calciumphosphat als Korrosionsschutzkomp., Polyesterharze zumindest als Teil der Polymermatrix, mit einer optionalen Polyether-Funktionalisierung; Nanodrähte als Nanostrukturkomp., optional mit Calciumphosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Calciumphosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Strontiumaluminiumpolyphosphat als Korrosionsschutzkomp., Acrylatharze zumindest als Teil der Polymermatrix, mit einer optionalen Polyether-Funktionalisierung; Nanodrähte als Nanostrukturkomp., optional mit Strontiumaluminiumpolyphosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Strontiumaluminiumpolyphosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Strontiumaluminiumpolyphosphat als Korrosionsschutzkomp., Epoxidharz zumindest als Teil der Polymermatrix, mit einer optionalen Polyether-Funktionalisierung; Nanodrähte als Nanostrukturkomp., optional mit Strontiumaluminiumpolyphosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Strontiumaluminiumpolyphosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Strontiumaluminiumpolyphosphat als Korrosionsschutzkomp., Polyesterharze zumindest als Teil der Polymermatrix, mit einer optionalen Polyether-Funktionalisierung; Nanodrähte als Nanostrukturkomp., optional mit Strontiumaluminiumpolyphosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Strontiumaluminiumpolyphosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Zinkaluminiumorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Zinkaluminiumorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Zinkaluminiumorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Zinkaluminiumorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Zinkaluminiumorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Zinkaluminiumorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Zinkaluminiumorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Zinkaluminiumorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Zinkaluminiumorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Zinkaluminiumpolyphosphat als Korrosionsschutzkomp., Acrylatharze zumindest als Teil der Polymermatrix, mit einer optionalen Polyether-Funktionalisierung; Nanodrähte als Nanostrukturkomp., optional mit Zinkaluminiumpolyphosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Zinkaluminiumpolyphosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Zinkaluminiumpolyphosphat als Korrosionsschutzkomp., Epoxidharz zumindest als Teil der Polymermatrix, mit einer optionalen Polyether-Funktionalisierung; Nanodrähte als Nanostrukturkomp., optional mit Zinkaluminiumpolyphosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Zinkaluminiumpolyphosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Zinkaluminiumpolyphosphat als Korrosionsschutzkomp., Polyesterharze zumindest als Teil der Polymermatrix, mit einer optionalen Polyether-Funktionalisierung; Nanodrähte als Nanostrukturkomp., optional mit Zinkaluminiumpolyphosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Zinkaluminiumpolyphosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Zinkmolybdenorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Zinkmolybdenorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Zinkmolybdenorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Zinkmolybdenorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Zinkmolybdenorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Zinkmolybdenorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Zinkmolybdenorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Zinkmolybdenorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Zinkmolybdenorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Zinkorthophosphat als Korrosionsschutzkomp., Acrylatharze zumindest als Teil der Polymermatrix, mit einer optionalen Polyether-Funktionalisierung; Nanodrähte als Nanostrukturkomp., optional mit Zinkorthophosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Zinkorthophosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Zinkorthophosphat als Korrosionsschutzkomp., Epoxidharz zumindest als Teil der Polymermatrix, mit einer optionalen Polyether-Funktionalisierung; Nanodrähte als Nanostrukturkomp., optional mit Zinkorthophosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Zinkorthophosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Zinkorthophosphat als Korrosionsschutzkomp., Polyesterharze zumindest als Teil der Polymermatrix, mit einer optionalen Polyether-Funktionalisierung; Nanodrähte als Nanostrukturkomp., optional mit Zinkorthophosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Zinkorthophosphat als Korrosionsschutzkomp., Polyesterharze zumindest als Teil der Polymermatrix, mit einer optionalen olefinisch reaktiven Silankomp.; Nanodrähte als Nanostrukturkomp., optional mit Zinkphosphat als Korrosionsschutzkomp., Acrylatharze zumindest als Teil der Polymermatrix, mit einer optionalen Polyether-Funktionalisierung; Nanodrähte als Nanostrukturkomp., optional mit Zinkphosphat als Korrosionsschutzkomp., Acrylatharze zumindest als Teil der Polymermatrix, mit einer optionalen epoxid-funktionellen Silankomp.; Nanodrähte als Nanostrukturkomp., optional mit Zinkphosphat als Korrosionsschutzkomp., Acrylatharze zumindest als Teil der Polymermatrix, mit einer optionalen olefinisch reaktiven Silankomp.; Nanodrähte als Nanostrukturkomp., optional mit Zinkphosphat als Korrosionsschutzkomp., Epoxidharz zumindest als Teil der Polymermatrix, mit einer optionalen Polyether-Funktionalisierung; Nanodrähte als Nanostrukturkomp., optional mit Zinkphosphat als Korrosionsschutzkomp., Epoxidharz zumindest als Teil der Polymermatrix, mit einer optionalen epoxid-funktionellen Silankomp.; Nanodrähte als Nanostrukturkomp., optional mit Zinkphosphat als Korrosionsschutzkomp., Epoxidharz zumindest als Teil der Polymermatrix, mit einer optionalen olefinisch reaktiven Silankomp.; Nanodrähte als Nanostrukturkomp., optional mit Zinkphosphat als Korrosionsschutzkomp., Polyesterharze zumindest als Teil der Polymermatrix, mit einer optionalen Polyether-Funktionalisierung; Nanodrähte als Nanostrukturkomp., optional mit Zinkphosphat als Korrosionsschutzkomp., Polyesterharze zumindest als Teil der Polymermatrix, mit einer optionalen epoxid-funktionellen Silankomp.; Nanodrähte als Nanostrukturkomp., optional mit Zinkphosphat als Korrosionsschutzkomp., Polyesterharze zumindest als Teil der Polymermatrix, mit einer optionalen olefinisch reaktiven Silankomp.; Nanofasern als Nanostrukturkomp., optional mit Calciumaluminiumorthophosphat als Korrosionsschutzkomp., Acrylatharze zumindest als Teil der Polymermatrix, mit einer optionalen Polyether-Funktionalisierung; Nanofasern als Nanostrukturkomp., optional mit Calciumaluminiumorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Calciumaluminiumorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Calciumaluminiumorthophosphat als Korrosionsschutzkomp., Epoxidharz zumindest als Teil der Polymermatrix, mit einer optionalen Polyether-Funktionalisierung; Nanofasern als Nanostrukturkomp., optional mit Calciumaluminiumorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Calciumaluminiumorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Calciumaluminiumorthophosphat als Korrosionsschutzkomp., Polyesterharze zumindest als Teil der Polymermatrix, mit einer optionalen Polyether-Funktionalisierung; Nanofasern als Nanostrukturkomp., optional mit Calciumaluminiumorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Calciumaluminiumorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Calciummagnesiumorthophosphat als Korrosionsschutzkomp., Acrylatharze zumindest als Teil der Polymermatrix, mit einer optionalen Polyether-Funktionalisierung; Nanofasern als Nanostrukturkomp., optional mit Calciummagnesiumorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Calciummagnesiumorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Calciummagnesiumorthophosphat als Korrosionsschutzkomp., Epoxidharz zumindest als Teil der Polymermatrix, mit einer optionalen Polyether-Funktionalisierung; Nanofasern als Nanostrukturkomp., optional mit Calciummagnesiumorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Calciummagnesiumorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Calciummagnesiumorthophosphat als Korrosionsschutzkomp., Polyesterharze zumindest als Teil der Polymermatrix, mit einer optionalen Polyether-Funktionalisierung; Nanofasern als Nanostrukturkomp., optional mit Calciummagnesiumorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Calciummagnesiumorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Calciumorthophosphat als Korrosionsschutzkomp., Acrylatharze zumindest als Teil der Polymermatrix, mit einer optionalen Polyether-Funktionalisierung; Nanofasern als Nanostrukturkomp., optional mit Calciumorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Calciumorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Calciumorthophosphat als Korrosionsschutzkomp., Epoxidharz zumindest als Teil der Polymermatrix, mit einer optionalen Polyether-Funktionalisierung; Nanofasern als Nanostrukturkomp., optional mit Calciumorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Calciumorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Calciumorthophosphat als Korrosionsschutzkomp., Polyesterharze zumindest als Teil der Polymermatrix, mit einer optionalen Polyether-Funktionalisierung; Nanofasern als Nanostrukturkomp., optional mit Calciumorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Calciumorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Calciumphosphat als Korrosionsschutzkomp., Acrylatharze zumindest als Teil der Polymermatrix, mit einer optionalen Polyether-Funktionalisierung; Nanofasern als Nanostrukturkomp., optional mit Calciumphosphat als Korrosionsschutzkomp., Acrylatharze zumindest als Teil der Polymermatrix, mit einer optionalen epoxid-funktionellen Silankomp.; Nanofasern als Nanostrukturkomp., optional mit Calciumphosphat als Korrosionsschutzkomp., Acrylatharze zumindest als Teil der Polymermatrix, mit einer optionalen olefinisch reaktiven Silankomp.; Nanofasern als Nanostrukturkomp., optional mit Calciumphosphat als Korrosionsschutzkomp., Epoxidharz zumindest als Teil der Polymermatrix, mit einer optionalen Polyether-Funktionalisierung; Nanofasern als Nanostrukturkomp., optional mit Calciumphosphat als Korrosionsschutzkomp., Epoxidharz zumindest als Teil der Polymermatrix, mit einer optionalen epoxid-funktionellen Silankomp.; Nanofasern als Nanostrukturkomp., optional mit Calciumphosphat als Korrosionsschutzkomp., Epoxidharz zumindest als Teil der Polymermatrix, mit einer optionalen olefinisch reaktiven Silankomp.; Nanofasern als Nanostrukturkomp., optional mit Calciumphosphat als Korrosionsschutzkomp., Polyesterharze zumindest als Teil der Polymermatrix, mit einer optionalen Polyether-Funktionalisierung; Nanofasern als Nanostrukturkomp., optional mit Calciumphosphat als Korrosionsschutzkomp., Polyesterharze zumindest als Teil der Polymermatrix, mit einer optionalen epoxid-funktionellen Silankomp.; Nanofasern als Nanostrukturkomp., optional mit Calciumphosphat als Korrosionsschutzkomp., Polyesterharze zumindest als Teil der Polymermatrix, mit einer optionalen olefinisch reaktiven Silankomp.; Nanofasern als Nanostrukturkomp., optional mit Strontiumaluminiumpolyphosphat als Korrosionsschutzkomp., Acrylatharze zumindest als Teil der Polymermatrix, mit einer optionalen Polyether-Funktionalisierung; Nanofasern als Nanostrukturkomp., optional mit Strontiumaluminiumpolyphosphat als Korrosionsschutzkomp., Acrylatharze zumindest als Teil der Polymermatrix, mit einer optionalen epoxid-funktionellen Silankomp.; Nanofasern als Nanostrukturkomp., optional mit Strontiumaluminiumpolyphosphat als Korrosionsschutzkomp., Acrylatharze zumindest als Teil der Polymermatrix, mit einer optionalen olefinisch reaktiven Silankomp.; Nanofasern als Nanostrukturkomp., optional mit Strontiumaluminiumpolyphosphat als Korrosionsschutzkomp., Epoxidharz zumindest als Teil der Polymermatrix, mit einer optionalen Polyether-Funktionalisierung; Nanofasern als Nanostrukturkomp., optional mit Strontiumaluminiumpolyphosphat als Korrosionsschutzkomp., Epoxidharz zumindest als Teil der Polymermatrix, mit einer optionalen epoxid-funktionellen Silankomp.; Nanofasern als Nanostrukturkomp., optional mit Strontiumaluminiumpolyphosphat als Korrosionsschutzkomp., Epoxidharz zumindest als Teil der Polymermatrix, mit einer optionalen olefinisch reaktiven Silankomp.; Nanofasern als Nanostrukturkomp., optional mit Strontiumaluminiumpolyphosphat als Korrosionsschutzkomp., Polyesterharze zumindest als Teil der Polymermatrix, mit einer optionalen Polyether-Funktionalisierung; Nanofasern als Nanostrukturkomp., optional mit Strontiumaluminiumpolyphosphat als Korrosionsschutzkomp., Polyesterharze zumindest als Teil der Polymermatrix, mit einer optionalen epoxid-funktionellen Silankomp.; Nanofasern als Nanostrukturkomp., optional mit Strontiumaluminiumpolyphosphat als Korrosionsschutzkomp., Polyesterharze zumindest als Teil der Polymermatrix, mit einer optionalen olefinisch reaktiven Silankomp.; Nanofasern als Nanostrukturkomp., optional mit Zinkaluminiumorthophosphat als Korrosionsschutzkomp., Acrylatharze zumindest als Teil der Polymermatrix, mit einer optionalen Polyether-Funktionalisierung; Nanofasern als Nanostrukturkomp., optional mit Zinkaluminiumorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Zinkaluminiumorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Zinkaluminiumorthophosphat als Korrosionsschutzkomp., Epoxidharz zumindest als Teil der Polymermatrix, mit einer optionalen Polyether-Funktionalisierung; Nanofasern als Nanostrukturkomp., optional mit Zinkaluminiumorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Zinkaluminiumorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Zinkaluminiumorthophosphat als Korrosionsschutzkomp., Polyesterharze zumindest als Teil der Polymermatrix, mit einer optionalen Polyether-Funktionalisierung; Nanofasern als Nanostrukturkomp., optional mit Zinkaluminiumorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Zinkaluminiumorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Zinkaluminiumpolyphosphat als Korrosionsschutzkomp., Acrylatharze zumindest als Teil der Polymermatrix, mit einer optionalen Polyether-Funktionalisierung; Nanofasern als Nanostrukturkomp., optional mit Zinkaluminiumpolyphosphat als Korrosionsschutzkomp., Acrylatharze zumindest als Teil der Polymermatrix, mit einer optionalen epoxid-funktionellen Silankomp.; Nanofasern als Nanostrukturkomp., optional mit Zinkaluminiumpolyphosphat als Korrosionsschutzkomp., Acrylatharze zumindest als Teil der Polymermatrix, mit einer optionalen olefinisch reaktiven Silankomp.; Nanofasern als Nanostrukturkomp., optional mit Zinkaluminiumpolyphosphat als Korrosionsschutzkomp., Epoxidharz zumindest als Teil der Polymermatrix, mit einer optionalen Polyether-Funktionalisierung; Nanofasern als Nanostrukturkomp., optional mit Zinkaluminiumpolyphosphat als Korrosionsschutzkomp., Epoxidharz zumindest als Teil der Polymermatrix, mit einer optionalen epoxid-funktionellen Silankomp.; Nanofasern als Nanostrukturkomp., optional mit Zinkaluminiumpolyphosphat als Korrosionsschutzkomp., Epoxidharz zumindest als Teil der Polymermatrix, mit einer optionalen olefinisch reaktiven Silankomp.; Nanofasern als Nanostrukturkomp., optional mit Zinkaluminiumpolyphosphat als Korrosionsschutzkomp., Polyesterharze zumindest als Teil der Polymermatrix, mit einer optionalen Polyether-Funktionalisierung; Nanofasern als Nanostrukturkomp., optional mit Zinkaluminiumpolyphosphat als Korrosionsschutzkomp., Polyesterharze zumindest als Teil der Polymermatrix, mit einer optionalen epoxid-funktionellen Silankomp.; Nanofasern als Nanostrukturkomp., optional mit Zinkaluminiumpolyphosphat als Korrosionsschutzkomp., Polyesterharze zumindest als Teil der Polymermatrix, mit einer optionalen olefinisch reaktiven Silankomp.; Nanofasern als Nanostrukturkomp., optional mit Zinkmolybdenorthophosphat als Korrosionsschutzkomp., Acrylatharze zumindest als Teil der Polymermatrix, mit einer optionalen Polyether-Funktionalisierung; Nanofasern als Nanostrukturkomp., optional mit Zinkmolybdenorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Zinkmolybdenorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Zinkmolybdenorthophosphat als Korrosionsschutzkomp., Epoxidharz zumindest als Teil der Polymermatrix, mit einer optionalen Polyether-Funktionalisierung; Nanofasern als Nanostrukturkomp., optional mit Zinkmolybdenorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Zinkmolybdenorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Zinkmolybdenorthophosphat als Korrosionsschutzkomp., Polyesterharze zumindest als Teil der Polymermatrix, mit einer optionalen Polyether-Funktionalisierung; Nanofasern als Nanostrukturkomp., optional mit Zinkmolybdenorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Zinkmolybdenorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Zinkorthophosphat als Korrosionsschutzkomp., Acrylatharze zumindest als Teil der Polymermatrix, mit einer optionalen Polyether-Funktionalisierung; Nanofasern als Nanostrukturkomp., optional mit Zinkorthophosphat als Korrosionsschutzkomp., Acrylatharze zumindest als Teil der Polymermatrix, mit einer optionalen epoxid-funktionellen Silankomp.; Nanofasern als Nanostrukturkomp., optional mit Zinkorthophosphat als Korrosionsschutzkomp., Acrylatharze zumindest als Teil der Polymermatrix, mit einer optionalen olefinisch reaktiven Silankomp.; Nanofasern als Nanostrukturkomp., optional mit Zinkorthophosphat als Korrosionsschutzkomp., Epoxidharz zumindest als Teil der Polymermatrix, mit einer optionalen Polyether-Funktionalisierung; Nanofasern als Nanostrukturkomp., optional mit Zinkorthophosphat als Korrosionsschutzkomp., Epoxidharz zumindest als Teil der Polymermatrix, mit einer optionalen epoxid-funktionellen Silankomp.; Nanofasern als Nanostrukturkomp., optional mit Zinkorthophosphat als Korrosionsschutzkomp., Epoxidharz zumindest als Teil der Polymermatrix, mit einer optionalen olefinisch reaktiven Silankomp.; Nanofasern als Nanostrukturkomp., optional mit Zinkorthophosphat als Korrosionsschutzkomp., Polyesterharze zumindest als Teil der Polymermatrix, mit einer optionalen Polyether-Funktionalisierung; Nanofasern als Nanostrukturkomp., optional mit Zinkorthophosphat als Korrosionsschutzkomp., Polyesterharze zumindest als Teil der Polymermatrix, mit einer optionalen epoxid-funktionellen Silankomp.; Nanofasern als Nanostrukturkomp., optional mit Zinkorthophosphat als Korrosionsschutzkomp., Polyesterharze zumindest als Teil der Polymermatrix, mit einer optionalen olefinisch reaktiven Silankomp.; Nanofasern als Nanostrukturkomp., optional mit Zinkphosphat als Korrosionsschutzkomp., Acrylatharze zumindest als Teil der Polymermatrix, mit einer optionalen Polyether-Funktionalisierung; Nanofasern als Nanostrukturkomp., optional mit Zinkphosphat als Korrosionsschutzkomp., Acrylatharze zumindest als Teil der Polymermatrix, mit einer optionalen epoxid-funktionellen Silankomp.; Nanofasern als Nanostrukturkomp., optional mit Zinkphosphat als Korrosionsschutzkomp., Acrylatharze zumindest als Teil der Polymermatrix, mit einer optionalen olefinisch reaktiven Silankomp.; Nanofasern als Nanostrukturkomp., optional mit Zinkphosphat als Korrosionsschutzkomp., Epoxidharz zumindest als Teil der Polymermatrix, mit einer optionalen Polyether-Funktionalisierung; Nanofasern als Nanostrukturkomp., optional mit Zinkphosphat als Korrosionsschutzkomp., Epoxidharz zumindest als Teil der Polymermatrix, mit einer optionalen epoxid-funktionellen Silankomp.; Nanofasern als Nanostrukturkomp., optional mit Zinkphosphat als Korrosionsschutzkomp., Epoxidharz zumindest als Teil der Polymermatrix, mit einer optionalen olefinisch reaktiven Silankomp.; Nanofasern als Nanostrukturkomp., optional mit Zinkphosphat als Korrosionsschutzkomp., Polyesterharze zumindest als Teil der Polymermatrix, mit einer optionalen Polyether-Funktionalisierung; Nanofasern als Nanostrukturkomp., optional mit Zinkphosphat als Korrosionsschutzkomp., Polyesterharze zumindest als Teil der Polymermatrix, mit einer optionalen epoxid-funktionellen Silankomp.; Nanofasern als Nanostrukturkomp., optional mit Zinkphosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Calciumaluminiumorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Calciumaluminiumorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Calciumaluminiumorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Calciumaluminiumorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Calciumaluminiumorthophosphat als Korrosionsschutzkomp., Epoxidharz zumindest als Teil der Polymermatrix, mit einer optionalen epoxidfunktionellen Silankomp.; Nanoröhren als Nanostrukturkomp., optional mit Calciumaluminiumorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Calciumaluminiumorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Calciumaluminiumorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Calciumaluminiumorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Calciummagnesiumorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Calciummagnesiumorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Calciummagnesiumorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Calciummagnesiumorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Calciummagnesiumorthophosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Calciummagnesiumorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Calciummagnesiumorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Calciummagnesiumorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Calciummagnesiumorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Calciumorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Calciumorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Calciumorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Calciumorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Calciumorthophosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Calciumorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Calciumorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Calciumorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Calciumorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Calciumphosphat als Korrosionsschutzkomp., Acrylatharze zumindest als Teil der Polymermatrix, mit einer optionalen Polyether-Funktionalisierung; Nanoröhren als Nanostrukturkomp., optional mit Calciumphosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Calciumphosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Calciumphosphat als Korrosionsschutzkomp., Epoxidharz zumindest als Teil der Polymermatrix, mit einer optionalen Polyether-Funktionalisierung; Nanoröhren als Nanostrukturkomp., optional mit Calciumphosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Calciumphosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Calciumphosphat als Korrosionsschutzkomp., Polyesterharze zumindest als Teil der Polymermatrix, mit einer optionalen Polyether-Funktionalisierung; Nanoröhren als Nanostrukturkomp., optional mit Calciumphosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Calciumphosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Strontiumaluminiumpolyphosphat als Korrosionsschutzkomp., Acrylatharze zumindest als Teil der Polymermatrix, mit einer optionalen Polyether-Funktionalisierung; Nanoröhren als Nanostrukturkomp., optional mit Strontiumaluminiumpolyphosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Strontiumaluminiumpolyphosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Strontiumaluminiumpolyphosphat als Korrosionsschutzkomp., Epoxidharz zumindest als Teil der Polymermatrix, mit einer optionalen Polyether-Funktionalisierung; Nanoröhren als Nanostrukturkomp., optional mit Strontiumaluminiumpolyphosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Strontiumaluminiumpolyphosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Strontiumaluminiumpolyphosphat als Korrosionsschutzkomp., Polyesterharze zumindest als Teil der Polymermatrix, mit einer optionalen Polyether-Funktionalisierung; Nanoröhren als Nanostrukturkomp., optional mit Strontiumaluminiumpolyphosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Strontiumaluminiumpolyphosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Zinkaluminiumorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Zinkaluminiumorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Zinkaluminiumorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Zinkaluminiumorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Zinkaluminiumorthophosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Zinkaluminiumorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Zinkaluminiumorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Zinkaluminiumorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Zinkaluminiumorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Zinkaluminiumpolyphosphat als Korrosionsschutzkomp., Acrylatharze zumindest als Teil der Polymermatrix, mit einer optionalen Polyether-Funktionalisierung; Nanoröhren als Nanostrukturkomp., optional mit Zinkaluminiumpolyphosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Zinkaluminiumpolyphosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Zinkaluminiumpolyphosphat als Korrosionsschutzkomp., Epoxidharz zumindest als Teil der Polymermatrix, mit einer optionalen Polyether-Funktionalisierung; Nanoröhren als Nanostrukturkomp., optional mit Zinkaluminiumpolyphosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Zinkaluminiumpolyphosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Zinkaluminiumpolyphosphat als Korrosionsschutzkomp., Polyesterharze zumindest als Teil der Polymermatrix, mit einer optionalen Polyether-Funktionalisierung; Nanoröhren als Nanostrukturkomp., optional mit Zinkaluminiumpolyphosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Zinkaluminiumpolyphosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Zinkmolybdenorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Zinkmolybdenorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Zinkmolybdenorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Zinkmolybdenorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Zinkmolybdenorthophosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Zinkmolybdenorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Zinkmolybdenorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Zinkmolybdenorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Zinkmolybdenorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Zinkorthophosphat als Korrosionsschutzkomp., Acrylatharze zumindest als Teil der Polymermatrix, mit einer optionalen Polyether-Funktionalisierung; Nanoröhren als Nanostrukturkomp., optional mit Zinkorthophosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Zinkorthophosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Zinkorthophosphat als Korrosionsschutzkomp., Epoxidharz zumindest als Teil der Polymermatrix, mit einer optionalen Polyether-Funktionalisierung; Nanoröhren als Nanostrukturkomp., optional mit Zinkorthophosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Zinkorthophosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Zinkorthophosphat als Korrosionsschutzkomp., Polyesterharze zumindest als Teil der Polymermatrix, mit einer optionalen Polyether-Funktionalisierung; Nanoröhren als Nanostrukturkomp., optional mit Zinkorthophosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Zinkorthophosphat als Korrosionsschutzkomp., Polyesterharze zumindest als Teil der Polymermatrix, mit einer optionalen olefinisch reaktiven Silankomp.; Nanoröhren als Nanostrukturkomp., optional mit Zinkphosphat als Korrosionsschutzkomp., Acrylatharze zumindest als Teil der Polymermatrix, mit einer optionalen Polyether-Funktionalisierung; Nanoröhren als Nanostrukturkomp., optional mit Zinkphosphat als Korrosionsschutzkomp., Acrylatharze zumindest als Teil der Polymermatrix, mit einer optionalen epoxid-funktionellen Silankomp.; Nanoröhren als Nanostrukturkomp., optional mit Zinkphosphat als Korrosionsschutzkomp., Acrylatharze zumindest als Teil der Polymermatrix, mit einer optionalen olefinisch reaktiven Silankomp.; Nanoröhren als Nanostrukturkomp., optional mit Zinkphosphat als Korrosionsschutzkomp., Epoxidharz zumindest als Teil der Polymermatrix, mit einer optionalen Polyether-Funktionalisierung; Nanoröhren als Nanostrukturkomp., optional mit Zinkphosphat als Korrosionsschutzkomp., Epoxidharz zumindest als Teil der Polymermatrix, mit einer optionalen epoxid-funktionellen Silankomp.; Nanoröhren als Nanostrukturkomp., optional mit Zinkphosphat als Korrosionsschutzkomp., Epoxidharz zumindest als Teil der Polymermatrix, mit einer optionalen olefinisch reaktiven Silankomp.; Nanoröhren als Nanostrukturkomp., optional mit Zinkphosphat als Korrosionsschutzkomp., Polyesterharze zumindest als Teil der Polymermatrix, mit einer optionalen Polyether-Funktionalisierung; Nanoröhren als Nanostrukturkomp., optional mit Zinkphosphat als Korrosionsschutzkomp., Polyesterharze zumindest als Teil der Polymermatrix, mit einer optionalen epoxid-funktionellen Silankomp.; Nanoröhren als Nanostrukturkomp., optional mit Zinkphosphat als Korrosionsschutzkomp., Polyesterharze zumindest als Teil der Polymermatrix, mit einer optionalen olefinisch reaktiven Silankomp.

Eine bevorzugte beispielhafte Variante wäre eine Kombination wie folgt: Bei der Nanostrukturkomponente handelt es sich um Kohlenstoff-Nanoröhren, wobei das Gewichtsverhältnis der Nanostrukturkomponente und den Kohlenstoffplättchen zwischen größer als 3 und kleiner als 4 liegt, das Gewichtsverhältnis der ersten Füllkomponente und der zweiten Füllkomponente zwischen 0,65 und 0,8 liegt, und wobei die die Kohlenstoffplättchen und/oder die Kohlenstoff-Nanostrukturkomponente eine Silan-Funktionalisierung mit einem Funktionalisierungsgrad zwischen 20%-40%.

Im Folgenden werden Ausführungsformen der Erfindung anhand der Zeichnungen näher erläutert. Es zeigen:

Figur 1     eine schematische Ansicht einer Korrosionsschutz-Zusammensetzung,

Figur 2     eine schematische Ansicht eines Schichtaufbaus mit zu schützender Metalloberfläche, Korrosionsschutz-Zusammensetzung und optionaler Decklackschicht,

Figur 3     Ergebnisse für Schichtaufbauten bei der Belastung durch Immersion in wässriger Lösung,

Figur 4     Ergebnisse für Schichtaufbauten bei der Belastung durch Immersion in wässriger Lösung,

Figur 5     Ergebnisse für Schichtaufbauten bei der Belastung durch Immersion in wässriger Lösung,

Figur 6     Ergebnisse für Schichtaufbauten bei der Belastung durch Immersion in wässriger Lösung,

Figur 7     Ergebnisse für Schichtaufbauten bei der Belastung durch Immersion in wässriger Lösung ohne und mit Polarisation,

Figur 8     eine schematische Ansicht eines Korrosionsüberwachungssystems,

Figur 9     eine schematische Ansicht eines Korrosionsschutzsystems und

Figur 10    ein Flussdiagramm eines Verfahrens zur Beschichtung einer gegen Korrosion zu schützenden Oberfläche.

Im Folgenden werden einander ähnliche Elemente mit den gleichen Bezugzeichen gekennzeichnet.

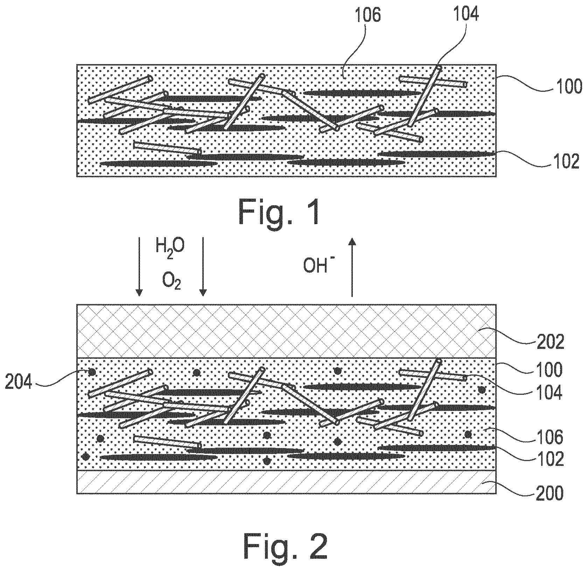

Figur 1 zeigt eine schematische Ansicht einer Korrosionsschutz-Zusammensetzung umfassend eine erste Füllkomponente und eine zweite Füllkomponente, wobei die erste Füllkomponente Kohlenstoffplättchen 102 und eine Nanostrukturkomponente 104 aufweist und die zweite Füllkomponente mit dem Bezugzeichen 106 gekennzeichnet ist und eine Polymermatrix aufweist. Das Gewichtsverhältnis der ersten Füllkomponente und der zweiten Füllkomponente liegt z.B. zwischen 0,4 und 1,2.

Zum Beispiel umfasst die Polymermatrix 106 ein ausgehärtetes Reaktionsharz, welches insbesondere ein Reaktionsharz umfasst, ausgewählt aus der Klasse der Epoxidharze, Polyesterharze und Acrylatharze. Im in Figur 1 schematisch gezeigten Zustand ist zum Beispiel das Reaktionsharz durch Polymerisation oder Polyaddition ausgehärtet.

Das Gewichtsverhältnis der Nanostrukturkomponente und der Kohlenstoffplättchen liegt z.B. zwischen 2 und 4, jedoch bevorzugt zwischen größer als 3 und kleiner als 4. Ohne Beschränkung der Allgemeinheit wird ferner davon ausgegangen, dass für dieses Beispiel die Nanostrukturkomponente mehrwandige Kohlenstoff-Nanoröhren umfasst. Statt mehrwandiger Kohlenstoff-Nanoröhren sind auch einwandige Kohlenstoff-Nanoröhren, Kohlenstoff-Nanodrähte oder Kohlenstoff-Nanofasern möglich.

Bei den Kohlenstoffplättchen handelt es sich insbesondere um sogenannte Graphenplatelets, also Gebilde, welche einen durchschnittlichen geometrischen Äquivalentdurchmesser insbesondere zwischen 0,5 $\mu$m und 5 $\mu$m haben

und zwischen 1 nm und 15 nm dick sind. Jedes Graphenplatelet besteht dabei aus mehreren Schichten von Graphen.

Wie in der Figur 1 schematisch gezeigt, sind die Graphenplatelets 102 vorzugsweise in einer solchen Konzentration in der Zusammensetzung 100 enthalten, dass sie die Diffusionswege von in die Zusammensetzung 100 etwaig eindringende Flüssigkeitsmolekülen signifikant erhöhen. Ohne Beschränkung der Allgemeinheit sei im Folgenden davon ausgegangen, dass es sich bei der Flüssigkeit um Wasser handelt und insofern bei den Flüssigkeitsmolekülen um Wassermoleküle.

Durch die durch die Graphenplatelets 102 erhöhte Hydrophobie der Zusammensetzung 100 wird z.B. zusätzlich das Wasserspeichervermögen der Schicht stark reduziert, was die korrosionsfördernde Einlagerung von Wasser und Elektrolyten stark zurückdrängen sollte.

Dringen nun in dem obigen Beispiel die Wassermoleküle in die Korrosionsschutz-Zusammensetzung 100 ein, so wird aufgrund der gewählten Konzentration der Graphenplatelets der Diffusionsweg der Wassermoleküle so stark erhöht, dass de facto ein Hindurchdringen der Wassermoleküle durch die Zusammensetzung 100 von oben nach unten verhindert wird.

Der Zweck der Kohlenstoff-Nanoröhren 104 ergibt sich aus Figur 2, welche einen Schichtaufbau zeigt, der auf einer zu schützenden Schicht 200 aufgebracht ist. Im Folgenden sei ohne Beschränkung der Allgemeinheit davon ausgegangen, dass es sich bei der Schicht 200 um eine Metallschicht, zum Beispiel eine Eisenplatte mit Eisen-Oberfläche, handelt.

Die Korrosionsschutz-Zusammensetzung 100 ist auf der Metalloberfläche der Schicht 200 angebracht. Eine optionale Decklackschicht 202 ist auf der Schicht der Korrosionsschutz-Zusammensetzung 100 angeordnet und schützt diese gegen mechanische Einflüsse und weitere Witterungseinflüsse.

Korrosion von Eisen, also zum Beispiel der Oberfläche der Schicht 200, startet in den meisten Fällen, wenn Wassermoleküle ($H_2O$) mit dem Metall in Berührung kommen. Dies führt dann dazu, dass positiv geladene Eisenionen in die wässrige Umgebung diffundieren und die im Metall 200 verbleibenden Elektronen mit Wasser und Sauerstoff $O_2$ zu Hydroxidionen $OH^-$ reagieren können. Die Hydroxidionen bilden mit den Eisenionen dann Eisen-(II)-Hydroxid. Weitere Redoxreaktionen führen dazu, dass sich letztendlich auch das rostbraune Eisen-(III)-Hydroxid bildet.

Durch die Korrosionsschutz-Zusammensetzung 100 wird das Risiko der Korrosion minimiert, da zunächst durch die Graphenplatelets der obig beschriebene Diffusionsweg der Wassermoleküle so stark erhöht wird, dass ein Inkontakttreten der Wassermoleküle mit der Metalloberfläche 200 weitgehend vermieden wird. Findet dies in längeren Zeiträumen etwaig dennoch statt, sorgen nun die in der Korrosionsschutz-Zusammensetzung enthaltenen Kohlenstoff-Nanoröhren 104 dafür, dass aufgrund ihrer elektrischen Leitfähigkeit die bei der stattfindenden Eisenionen-Freisetzung freiwerdenden Elektronen, insbesondere bei der Ausbildung einer Eisenoxidschicht, weg vom Metall 200 transportiert werden. Damit findet, anschaulich gesprochen, die Hydroxidbildung nicht mehr am Metall 200, sondern irgendwo vom Metall entfernt innerhalb oder bevorzugterweise an der Oberfläche der Schicht der Korrosionsschutz-Zusammensetzung 100 statt. Dies sorgt dafür, dass der Hydroxidionen Entstehung, der alkalischen Zerstörung der Polymermatrix an der Grenzfläche des Metalls 200 zur Schicht der Korrosionsschutz-Zusammensetzung 100, der Entstehung einer freien, nicht durch eine Beschichtung vor Korrosion geschützten Metalloberfläche und somit letztlich stark der kathodischen Delamination entgegengewirkt wird.

Wie bereits obig beschrieben, könnte dies jedoch dazu führen, dass die Hydroxidionen mit der Polymermatrix 106 reagieren, insbesondere dann, wenn es nicht gelingt, die Entladung des Sauerstoffs an die Oberfläche der Schicht der Korrosionsschutz-Zusammensetzung 100 zu verschieben. Diese Prozesse sind dann möglich, wenn zum einen der Korrosionsdruck durch zu starke Elektrolytbelastung sehr groß wird und/oder zum anderen, wenn die Schicht der Korrosionsschutz-Zusammensetzung 100 eine für die Korrosionsbelastung nicht ausreichende Leitfähigkeit aufweist. In diesem Fall könnte die Polymermatrix 106 im Lauf der Zeit beschädigt werden. Dies führt dann unter Umständen zu Kohäsionsbrüchen innerhalb Korrosionsschutz-Zusammensetzung, wobei zumindest zum großen Teil die Oberfläche des Metalls 200, weiterhin durch eine zwar dünnere, jedoch noch zum großen Teil verbleibende Schicht der Korrosionsschutz-Zusammensetzung 100 vor der sogenannten kathodischen Delamination geschützt bleibt.

Letzteres ist allerdings weniger kritisch als eine Metallkorrosion bei der es großflächig zur Bildung einer für Elektrolyt und Sauerstoff frei zugängliche Metalloberfläche kommt. Durch ein Neuauftragen der Korrosionsschutz-Zusammensetzung auf die Metalloberfläche kann ferner eine solche Art der Korrosion bei der erfindungsgemäßen Anwendung der Schicht der Korrosionsschutz-Zusammensetzung 100 in relativ einfacher Weise "repariert" werden kann.

In der schematischen Darstellung der Figur 2 weist die Korrosionsschutz-Zusammensetzung 100 (die zugehörige Schicht) ferner optional Partikel einer aktiven Korrosionsschutzkomponente 204 auf, welche offensichtlich synergistisch, durch Bildung kompakter Eisenoxidschichten, die Eisenionen Freisetzung und damit die anodischen Prozesse hemmt, wobei der Anteil der Partikel insbesondere zwischen 0,1 und 0,75 Gew.-% bezogen auf die Gesamtzusammensetzung der Korrosionsschutzkomponente 100 beträgt. Im konkreten Beispiel handelt es sich um Zinkmolybdänorthophosphat (nachfolgend als ZMP bezeichnet) mit einem Zinkgehalt zwischen 53,5 und 56,5 %, einem Phosphorgehalt

als $PO_4^3$ von 37 bis 40 % und einem Molybdängehalt als $MO_3$ von 1,2 bis 2,2 %.

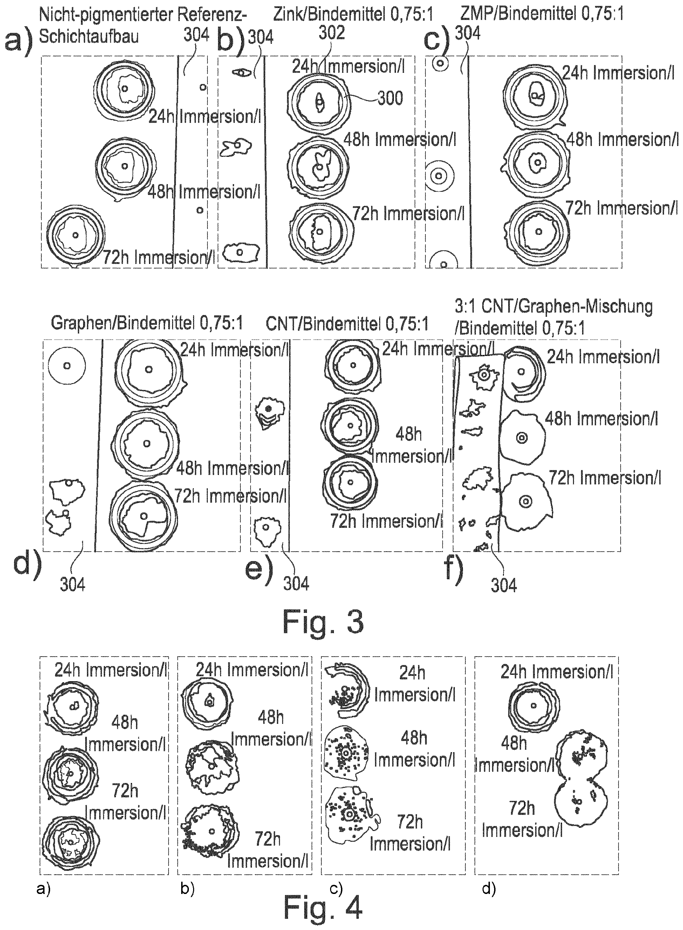

In den nachfolgenden Figuren 3 bis 6 werden experimentelle Ergebnisse für verschiedene Schichtaufbauten mit unterschiedlichen Zusammensetzungen entsprechender Korrosionsschutz-Zusammensetzungen 100, jeweils bei der Belastung durch Immersion mit 5-prozentiger NaCl-Lösung gezeigt. Die Belastung durch Immersion mit 5-prozentiger NaCl-Lösung simuliert dabei einen hochkorrosiven Vorgang, welcher weiter dadurch beschleunigt wird, dass der Schichtaufbau an einer bestimmten Stelle gewollt beschädigt ist, sodass an dieser Stelle nahezu ungehindert der Zutritt von Sauerstoff und dem wässrigen Elektrolyt ermöglicht wird, so dass der Korrosionsvorgang ansetzen kann. Dieses experimentelle Vorgehen ermöglicht, innerhalb kurzer Zeiträume von maximal 72 Stunden die tatsächliche Korrosionsbeständigkeit der gewählten Korrosionsschutz-Zusammensetzungen bei Verletzung des Schichtaufbaus zu beurteilen.

Der im Folgenden verwendete Schichtaufbau entspricht dem Schichtaufbau der Fig. 2, wobei auf der Schicht 202 noch eine weitere Decklackschicht aufgebracht ist. Im Folgenden sei die Schicht 202 als "1. Decklack" und eine auf der Schicht 202 auf der der Schicht 100 abgewandten Seite aufgebrachte Schicht als "2. Decklack" bezeichnet.

Für die nachfolgend beschriebenen Experimente wurden wie folgt vorgegangen: Herstellung des 1. Decklacks: Unter Rühren wird Araldite EP GZ7071 x75 (10%ig) 4,4g für die 1. Decklack-Formulierung homogenisiert. Anschließend wird 3,62g Aradur-Härter 423 XW60 (10%ig) zugeben, appliziert und 12h bei Raumtemperatur getrocknet. Die Applikation des 1. Decklacks auf der Schicht 100 wird hierbei so gewählt, dass die Schicht 202 eine Trockenschichtdicke von ca. 20 μm aufweist.

Details zum Araldite GZ7071x75 (Huntsman Advanced Materials GmbH; Schweiz) sind: Epoxy Index (ISO 3001) 1.50-1.67 [eq/kg], Epoxy Equivalent (ISO 3001) 600-670 [g/Eq], Feststoffgehalt (ISO 3251) 74.0-76.0 [%], Viskosität 25 °C (Kugelfallviskosimeter, ISO 12058-1) 8000-13000 [mPa s]. Details zum Härter sind: Aradur 423 XW 60; (Huntsman Advanced Materials GmbH; Schweiz), Aminzahl (ISO 9702) 122 — 138 [mg KOH/g], Feststoffgehalt (ISO 3251) 59 — 61 [%], Viskosität 25 °C (Rotationsviskosimeter), ISO 3219) 800 — 1400 [mPa s].

Herstellung des 2. Decklacks: Unter Rühren wird Bayhydrol A145 (45%) 38,54g für die 2. Decklack-Formulierung homogenisiert. Anschließend wird die 8,83 Desmodur-Härter N3900 zugeben, appliziert und 12h bei Raumtemperatur getrocknet. Die Applikation des 1. Decklacks auf der Schicht 100 wird hierbei so gewählt, dass die Schicht eine Trockenschichtdicke von ca. 40 μm aufweist.

Details zum Bindemittel Bayhydrol sind: Bayhydrol A145; OH-funktionelle Polyacrylatdispersion (Covestro Deutschland AG), Säurezahl (DIN EN ISO 2114) 10 ± 3 mg KOH/g, Viskosität bei 23 °C (D = 41,28 s-1; DIN EN ISO 3219/A.3) 950 ± 550 mPa·s. Details zum Härter Desmodur sind: Desmodur N 3900; aliphatisches Polyisocyanat-Harz auf Basis Hexamethylendiisocyanat (Covestro Deutschland AG), NCO-Gehalt (M105-ISO 11909) 23,5 ± 0,5 Gew.-%, Viskosität bei 23 °C (M014-ISO 3219/A.3) 730 ± 100 mPa·s.

Herstellung der die Korrosionsschutz-Zusammensetzung 100 aufweisenden Schicht, im Folgenden auch "Primer Beschichtung" oder "Primer" genannt: Als Komponenten kommen die in der nachfolgenden Tabelle genannten Stoffe zum Einsatz.

| Primerschicht | Zink-rich Primer | Kohlenstoffhaltiger Primer | Kohlenstoffhaltiger Primer mit 0,5 % Zinkphosphat |
|---|---|---|---|
| Zinkstaub | 0,6 | 0,0 | 0,0 |
| Epoxy-Bindemittel (10%ig) | 4,4 | 4,4 | 4,4 |
| Butylacetat | 0 | 45 | 45 |
| Aceton | 0 | 25 | 25 |
| Efka 4050 (40%ig) | 0 | 0,89 | 0,89 |
| Graphenplatelets | 0,0 | 0,15 | 0,15 |
| Nanoröhren | 0,0 | 0,45 | 0,45 |
| Zinkpartikel | 0 | 0 | 0,006 |
| Härter Aradur (10%ig) | 3,62 | 3,62 | 3,62 |
| (Angaben jeweils als Einwaage /g) | | | |

Bei den Nanoröhren handelt es sich um Multiwall Carbon Nanotubes, hergestellt durch Catalytic Chemical Vapor Deposition (CCVD). Der mittlere Durchmesser der Röhren (Transmissionselektronen-Mikroskopie, TEM) beträgt 9.5×10-9 m, die mittlere Länge (Transmissionselektronen-Mikroskopie, TEM) beträgt 1,5 μm und der Kohlenstoffgehalt

(Thermogravimetrische Analyse; TGA) liegt bei 90 %.

Die Graphenplatelets haben einen mittleren Partikeldurchmesser < 2μm und eine mittlere Plättchendicke von 10-15nm. Die Zinkphosphatpartikel haben einen Zn-Gehalt 53,5 — 56,5 %; Phosphorgehalt als PO43- 37,0 — 40,0; Molybdängehalt als MoO3 1,2 -2,2 %. Der Zinkstaub weist eine mittlere Korngröße von 3,5 μm auf (Kornform sphärisch) bei einem Gehalt von Zn-gesamt 99 % und Zn-metallisch 96%.

Bei dem Epoxy-Bindemittel handelt es sich um Araldite® GZ7071x75 (Huntsman Advanced Materials GmbH; Schweiz), Epoxy Index (ISO 3001) 1.50-1.67 [eq/kg], Epoxy Equivalent (ISO 3001) 600-670 [g/Eq], Feststoffgehalt (ISO 3251) 74.0-76.0 [%], Viskosität 25 °C (Kugelfallviskosimeter, ISO 12058-1) 8000-13000 [mPa s]. Bei dem Polyamidoamin-Härter handelt es sich um Aradur® 423 XW 60; (Huntsman Advanced Materials GmbH; Schweiz), Aminzahl (ISO 9702) 122 — 138 [mg KOH/g], Feststoffgehalt (ISO 3251) 59 — 61 [%], Viskosität 25 °C (Rotationsviskosimeter), ISO 3219) 800 — 1400 [mPa s].

Unter Rühren werden die in der obigen Tabelle angegebenen Mengen der Komponenten für die jeweilige Primer-Formulierung homogenisiert und nachfolgend unter Verwendung von Ultraschall (Ultraschallfinger und Steuergerät UP400 S der Fa. Hielscher; bei 0,7 Cycle und 100% Amplitude) für 1 Stunde bei Temperierung auf 25 °C dispergiert. Zur Unterstützung der Dispersion wird das Dispersionsmittel EF-KA 4050 hinzugefügt. Anschließend wird die jeweilige Menge Aradur-Härter zugeben, appliziert und 12h bei Raumtemperatur getrocknet. Die Applikation wird hierbei so gewählt, dass die Schicht 100 eine Trockenschichtdicke TDS von ca. 20 μm aufweist.

Im Ergebnis ergibt sich eine Korrosionsschutz-Zusammensetzung, welche eine Polymermatrix aufweist, welche nebst dem Bindemittel und dem Härter auch das Dispersionsmittel enthält.

In den Figuren 3-6 sind die Resultate einer Immersionsbelastung einer mit der Primer-Schicht und den beiden Decklackschichten überzogenen Metallplatte (Stahlsubstrat) mit 5%iger NaCl-Lösung bei Raumtemperatur für jeweils 24h, 48h, und 72h gezeigt. Die Immersionsbelastung erfolgt dabei jeweils in einem durch einen kreiszylinderförmigen Testcontainer begrenzten Bereich 302, wobei zur Beschleunigung der Korrosion im Zentrum 300 des Bereichs 302 der aus der Primer-Schicht und den beiden Decklackschichten bestehende "Korrosionsschutz" punktuell, durch eine 2 mm Bohrung, entfernt wurde. An dieser Stelle 300 ist grundsätzlich das freie Metall der Metallplatte sichtbar, auf welche der Korrosionsschutz aufgebracht wurde. Der Schichtaufbau ist also wie folgt: Metallplatte (Baustahl)— Korrosionsschutz, wobei der Korrosionsschutz die folgenden Schichten aufweist: Primer-Schicht, 1. Decklackschicht, 2. Decklackschicht.

Nach der angegebenen Immersionsdauer wurde der mit Silikon aufgeklebte Testcontainer mit der NaCl-Lösung entfernt. Nach dem Trocknen wurde die belastete Fläche mit einem Klebestreifen TESA 4651 beklebt und nachfolgend abgerissen. Der abgerissene Klebestreifen ist — sofern in den Figuren gezeigt — mit Bezugszeichen 304 gekennzeichnet.

In den Fig. 3 a)—f) sind die Ergebnisse der Immersion für unterschiedliche Arten von Korrosionsschutz gezeigt. In jedem Fall ist die 1. und die 2. Decklackschicht vorhanden, Unterschiede bestehen nur bezüglich der Primer-Schicht. In der Reihenfolge von oben links nach unten rechts: a) Referenzsystem ohne erste Füllkomponente und ohne aktive Korrosionsschutzkomponente; b) Referenzsystem mit Zink-Primer ("Zink-rich Primer"); c) Referenzsystem mit ZMP aber ohne erste Füllkomponente; d) Referenzsystem mit Graphenplatelets aber ohne aktive Korrosionsschutzkomponente und ohne Nanoröhren; e) Referenzsystem mit Nanoröhren aber ohne Graphenplatelets und ohne aktive Korrosionsschutzkomponente; f) System mit Graphenplatelets und Nanoröhren, jedoch ohne aktive Korrosionsschutzkomponente. Die Angaben beziehen sich jeweils bei einem KohlenstoffKomponenten/Bindemittel-Festkörperverhältnis von 0,75/1.

Der spezifische Oberflächenwiderstand der Primerschicht in Ohm beträgt in der Reihenfolge der Fig. 3a)-3f): 1,6 E+11; 4,0 E+10; 1,4 E+11; 1,6 E+04; 4,9 E+03; 1,6 E+04.

Im Fall der Fig. 3f) beträgt das Gewichtsverhältnis der Nanoröhren und den Kohlenstoffplättchen 3 und das Gewichtsverhältnis der ersten Füllkomponente und der zweiten Füllkomponente beträgt unter Berücksichtigung der Konzentrationen des Epoxy-Bindemittels und des Härters ca. 0,75.

Es lässt sich in Fig. 3 erkennen, dass die Unterschiede bezüglich der enthafteten Bereiche zwischen 24h, 48h und 72h Belastung für die Referenzsysteme nichtpigmentiertes Referenzsystem (Fig. 3a), Referenzsystem mit Zink-Primer (Fig. 3b), Referenzsystem mit ZMP (Fig. 3c), Referenzsystem mit Graphen-Primer (Fig. 3d) und Referenzsystem mit CNT-Primer (Fig. 3d) im Vergleich zum System mit Graphenplatelets und Nanoröhren jeweils deutlich ausgeprägt sind.

Z.B. hat in Fig. 3a) nach 72h eine nahezu vollständige Enthaftung der Primer-schicht stattgefunden — das blanke Metall ist sichtbar. In Fig. 3b) scheint zunächst die Enthaftung geringer zu sein. Das Aufbringen und Abreisen des Klebestreifens 304 zeigt jedoch aufgrund des Anhaftens der Beschichtung, dass auch hier eine großflächige Enthaftung der Primerschicht stattgefunden hat.

Zwar zeigt auch das System mit Graphenplatelets und Nanoröhren (Fig. 3f) anhand des Tests mit dem Klebestreifen, dass eine Enthaftung stattgefunden hat. Bei genauerem Betrachten der belasteten Fläche ist jedoch zu erkennen, dass die Enthaftung bei dem System mit Graphenplatelets und Nanoröhren durch Kohäsionsbruch innerhalb der Primerschicht stattgefunden hat, bei den Referenzproben jedoch eine Enthaftung durch kathodische Delamination direkt an der Metalloberfläche stattgefunden hat. Hierdurch kommt es bei den Referenzproben durch eine mit Belastungsdauer immer stärker beschleunigten Korrosion, während für das System mit Graphenplatelets und Nanoröhren bei der Belastung nur vergleichsweise geringe freie Metalloberflächen entstehen.

Daraus folgt, dass bei dem System mit Graphenplatelets und Nanoröhren infolge der elektrischen Leitfähigkeit der Nanoröhren und der Barrierewirkung, sowie der Hydrophobie der Graphenplatelets gegenüber dem Eindringen bzw. Speichern von Wasser bei der Belastung durch Immersion mit einer 5%iger NaCl-Lösung zu einer deutlichen Hemmung der kathodischen Unterwanderung kommt, welche die Ursache für die Enthaftung darstellt. Zusätzlich kommt es zu einer Verlagerung der kathodischen Prozesse, d.h. der Entladung von Sauerstoff in die mit KohlenstoffKomponenten pigmentierten Primerschicht. Insgesamt wird bei dem System mit Graphenplatelets und Nanoröhren die Korrosionsbeständigkeit erhöht.

Fig. 4 a-d) zeigen die Ergebnisse der Immersion für die Schichtaufbauten von Primern mit unterschiedlichen Verhältnissen Nanoröhren/Graphenplatelets bei der Belastung durch Immersion mit 5%iger NaCl-Lösung, jeweils bei einem Gewichtsverhältnis der Kohlenstoffkomponenten zu der Polymermatrix von 0,75.

Nach der angegebenen Immersionsdauer wurde der mit Silikon aufgeklebte Testcontainer mit der NaCl-Lösung entfernt und dem Trocknen die belastete Fläche mit einem Klebestreifen TESA 4651 beklebt und nachfolgend abgerissen. Die resultierenden enthafteten Beschichtungsbereiche sind in Abb.4 vergleichend für unterschiedliche CNT/ Graphenplatelets -Verhältnisse gezeigt (Fig. 4a Verhältnis 1:3; Fig. 4b Verhältnis 1:1; Fig. 4c Verhältnis 3:1; Fig. 4b Verhältnis 4:1). Der spezifische Oberflächenwiderstand der Primerschicht in Ohm beträgt in der Reihenfolge der Fig. 4a)-4d): 4,6 E+04; 1,5 E+04; 1,6 E+04; 1,1 E+04.

Es lässt sich erkennen, dass die Unterschiede bezüglich der enthafteten Bereiche zwischen 24h und 48h Belastung jeweils groß sind, sich dann jedoch zwischen 48h und 72h nur noch wenig verändern. Vergleicht man die Ergebnisse nun zwischen den mit unterschiedlichen CNT/Graphenplatelets-Verhältnissen geprimerten Proben bezüglich der enthafteten Flächen, so zeigt der Aufbau mit einem 3:1-Verhältnis von CNT zu Graphen im Vergleich zu den drei anderen Proben eine deutlich verringerte enthaftete Fläche.

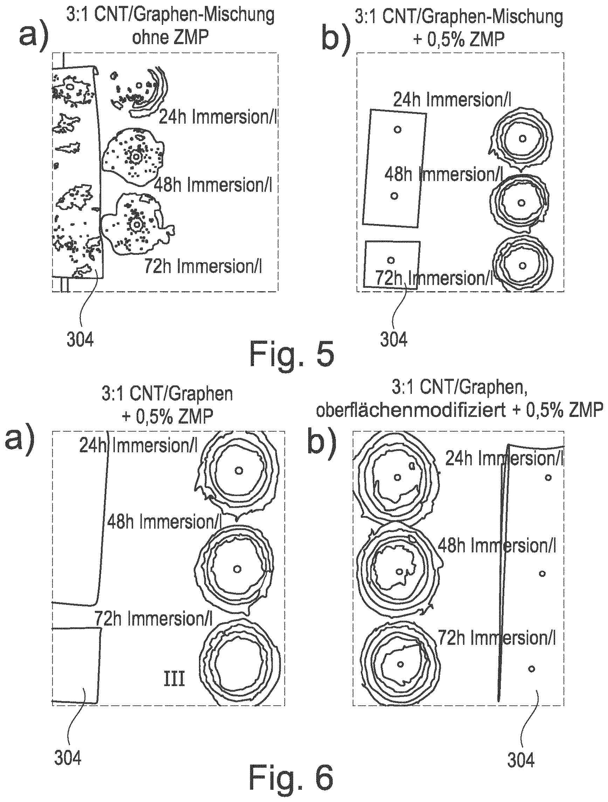

Fig. 5a) und 5b) zeigen die Ergebnisse der Immersion für die Schichtaufbauten von Primern ohne Zusatz von ZMP (Fig. 5a) und mit 0,5%ZMP (Fig. 5b) bei der Belastung durch Immersion mit 5%iger NaCl-Lösung, jeweils bei einem Gewichtsverhältnis der Kohlenstoffkomponenten zu der Polymermatrix von 0,75. Das Gewichtsverhältnis der CNT zu den Graphenplatelets betrug 3:1.

Nach der angegebenen Immersionsdauer wurde der mit Silikon aufgeklebte Testcontainer mit der NaCl-Lösung entfernt und dem Trocknen die belastete Fläche mit einem Klebestreifen TESA 4651 beklebt und nachfolgend abgerissen.

Es lässt sich erkennen, dass auch hier die Unterschiede bezüglich der enthafteten Bereiche zwischen 24h und 48h Belastung jeweils etwas größer sind als zwischen 48h und 72h. Vergleicht man die Ergebnisse nun zwischen den mit unterschiedlichen geprimerten Proben bezüglich der enthafteten Flächen, so zeigt der Aufbau mit einem 3:1-Verhältnis von CNT zu Graphenplatelets, welcher zusätzlich 0,5 % ZMP beinhaltet, im Vergleich zu der Probe ohne ZMP eine weitere Verbesserung bezüglich der enthafteten Fläche. Weitere hier nicht gezeigte Experimente haben außerdem ergeben, dass insbesondere ab einem Anteil von mehr als 0,9% ZMP eine Zunahme der enthafteten Bereiche auftritt. Dieses Resultat zeigt den synergistischen Effekt der Hemmung von anodischen Korrosionsprozessen bei zusätzlicher Zugabe eines aktiven Korrosionsschutzpigments, wenn es in der richtigen Dosierung zur erfindungsgemäßen Primerformulierung zugegeben wird.

Fig. 6a) und 6b) zeigen die Ergebnisse der Immersion für die Schichtaufbauten von Primern mit Zusatz von 0,5%ZMP, wobei im Schichtaufbau der Fig. 6b die Nanoröhren und die Graphenplatelets eine Silan-Oberflächenmodifikation aufweisen. Die Immersion erfolgte bei einer Belastung durch Immersion mit 5%iger NaCl-Lösung, jeweils bei einem Gewichtsverhältnis der Kohlenstoffkomponenten zu der Polymermatrix von 0,75. Das Gewichtsverhältnis der CNT zu den Graphenplatelets betrug 3:1.

Die Oberflächenmodifizierung der Nanoröhren/Graphenplatelet-Mischung wurde durchgeführt indem 0,15g Graphen und 0,45g CNT in einer Lösemittelmischung, bestehend aus 45g Butylacetat und 25g Aceton, unter Zugabe von 0,6g Polypropylenglycol (Molekulargewicht 725 g/mol), für 120 min unter Verwendung eines Ultraschallfingers unter Kühlung bei Raumtemperatur dispergiert wurden. Anschließend wurde 0,36g einer reaktiven Silankomponente zugesetzt und zur Homogenisierung, sowie Durchmischung der Probe für 15 Minuten unter Verwendung eines Magnetrührers leicht gerührt, für weiter 15 Minuten auf 70°C unter leichtem Rühren erwärmt, wiederum auf Raumtemperatur temperiert und für 15 Minuten abschließend unter Verwendung eines Ultraschallfingers dispergiert. Als reaktive Silankomponenten wurde Vinyl-trimethoxysilan (VTMO), 3-Methacryloxypropyltrimethoxysilan (MEMO) und 3-Glycidyloxypropyltrimethoxysilan (GLYMO) verwendet. Die besten Ergebnisse bezüglich der Korrosionsschutzwirkung wurden mit den Doppelbindungs-funktionellen reaktiven Silankomponenten Vinyl-trimethoxysilan (VTMO) und 3-Methacryloxypropyltrimethoxysilan (MEMO) erhalten.

Der Grund für die Silanmodifizierung der Nanoröhren und Graphenplatelets ist folgender: Bei genauerer Betrachtung fallen die relativ in Bezug auf Bindemittelgehalt hohen Gehalte an dem Dispergieradditiv Efka 4050 auf, welches zur Stabilisierung der CNT und Graphen-Partikel in der Epoxy-Primerformulierung hilfreich ist. Diese Gehalte von freien, d.h. nicht in der Bindemittelmatrix gebundenen Fremdpolymeren kann die Kompaktheit der Polymermatrix und damit der Korrosionsschutz-Zusammensetzung stören, was sich unter anderem oftmals in einer höheren Permeabilität von für Korrosionsvorgänge relevanten Komponenten wie Sauerstoff, Elektrolyten und Wasser, zeigt. Durch die Silanmodifizierung kann auf Dispergieradditive verzichtet werden.

Vergleicht man nun in Fig. 6 die Ergebnisse nun zwischen der oberflächenmodifizierten Nanoröhren/Graphenplatelets-Mischung (Fig. 6b) und der entsprechenden Nanoröhren/Graphenplatelets-Mischung ohne Oberflächenmodifizierung (Fig. 6a), so zeigt sich eine verminderte Unterwanderung für die Probe mit der oberflächenmodifizierten Mischung.

Nachfolgend sind die Ergebnisse aufgeführt, welche sich unter Einfluss einer elektrostatischen Polarisation zwischen Stahlsubstrat und der 3:1 Nanoröhren/Graphenplatelets-Primerschicht mit Zugabe von 0,5% ZMP ausbilden. Wird ein Metallsubstrat in adäquater Weise negativ polarisiert, so wird die Herauslösung positiver Metallionen zurückgedrängt. Zusätzlich kann die Einlagerung der Metallionen bei einer positiven Polarisation der Primerschicht zurückgedrängt werden. Dementsprechend wurden Polarisationsexperimente durchgeführt, wobei die 3:1 Nanoröhren/Graphenplatelets-Primerschicht gegenüber einer Referenzelektrode positiv, das Stahlsubstrat jedoch negativ polarisiert wurde. Als Referenzelektrode wurde ein Platindraht und eine Immersion des Gesamtaufbaus mit 5%iger NaCl-Lösung, verwendet, wobei zwischen Anode und Kathode ein Potential von ca. 0,28 V angelegt wurde.

Belastet wurde wiederum durch 24h Immersion bei Raumtemperatur mit 5%iger NaCl-Lösung. Bewertet wurde die Enthaftung durch Abriss mit wiederum unter Verwendung von Klebeband nach Entfernen und Abtrocknen der belasteten Beschichtungsbereiche. Als Vergleich diente die entsprechend belastete Probe ohne Polarisation.

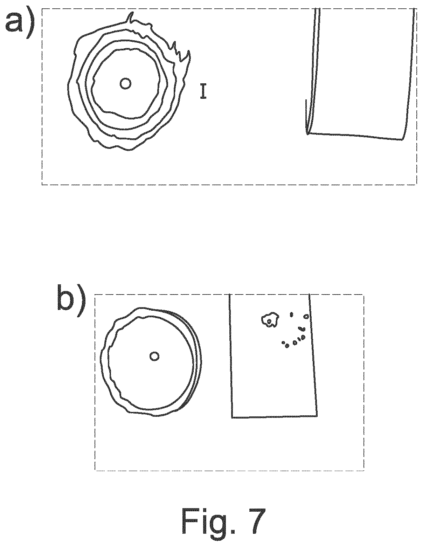

Beim Betrachten der erhaltenen Ergebnisse in Fig. 7 zeigt die Probe welche unter Polarisation belastet wurde (Fig. 7b) weniger Schäden um die Verletzungsstelle als die ohne Polarisation belastete Probe (Fig. 7a). Dieses Ergebnis beweist, dass sich der beschriebene Beschichtungsaufbau mit der Nanoröhren/Graphenplatelets - Mischung enthaltenden, leitfähigen Primerschicht ausgezeichnet für Polarisation und somit für den schweren Korrosionsschutz, beispielsweise im Off-Shore-Bereich eignet.

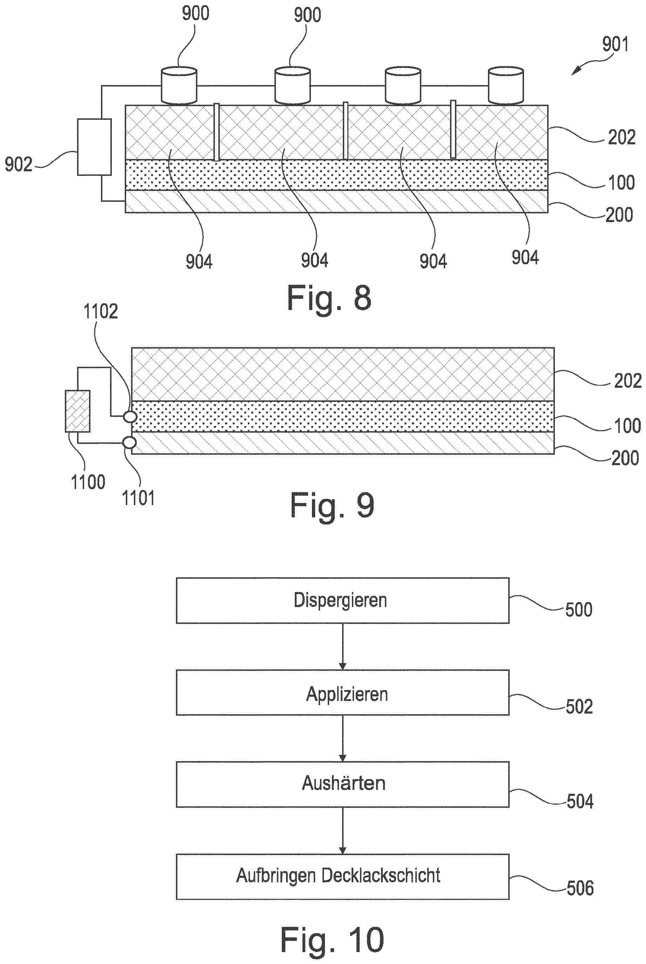

Fig. 8 zeigt ein Korrosionsüberwachungssystem 901 umfassend die bereits bezüglich Fig. 2 diskutierten Schichten. Die Metallfläche 200 ist durch die Schicht 100 der Korrosionsschutz-Zusammensetzung überzogen. Optional ist die Schicht 100 durch die Decklackschicht 202 überzogen und damit geschützt. Um nun die Korrosion der Metallfläche 200 und/oder der Schicht 100 festzustellen, kommt eine Vorrichtung 902 zur frequenzabhängigen Bestimmung der Impedanz mit mindestens einer Messelektrode und einer Gegenelektrode zur Anwendung. Eine der beiden Elektroden ist mit der Schicht 202 oder der Schicht 100 elektrisch kontaktiert, die andere der Elektroden mit dem die Metallfläche 200 aufweisenden Material kontaktiert.

Bei der Impedanzspektroskopie wird der elektrische Wechselstromwiderstand des zu untersuchenden Systems in einem insbesondere breiten Frequenzspektrum (im Allgemeinen im Frequenzbereich von MHz bis mHz) gemessen und ausgewertet. Die fließenden Ströme bei der Impedanzspektroskopie sind so schwach, dass keine Gefahr besteht, dass durch die Messung eine Korrosion oder eine Polarisation stattfindet.

Es sei angemerkt, dass z.B. die Decklackschicht 202 selbst nicht elektrisch leitfähig sein muss, damit die Impedanzmessungen durchgeführt werden können. Nichtleitende Deckschichten erzeugen einen zusätzlichen Beitrag zur Gesamtimpedanz , was bei der Impedanzspektroskopie insofern in das Messergebnis einfließt.

Die Kontaktierung der Decklackschicht 202 oder der Schicht 100 kann über vorzugsweise ein elektrisch leitfähiges Elastomer erfolgen, welches auf der jeweiligen Schicht aufgebracht wird.

Um die Korrosionseigenschaften lokal festzustellen, ist vorgesehen, dass die Decklackschicht 202 bevorzugt in elektrisch zueinander isolierte Domänen 904 unterteilt ist, wie beispielhaft in Fig. 9 dargestellt. Dies ist bei elektrisch leitfähigen Decklackschichten sinnvoll. Hierdurch werden die bei der Impedanzspektroskopie wirkenden Ströme auf jene Domänen 904 verteilt, welche in unmittelbarer Nähe zur entsprechenden lokalen Elektrode 900 vorhanden sind. Damit ist eine lokale Aussage bezüglich der Korrosionsschutzeigenschaften im Bereich der besagten Domänen möglich. Es ist sinnvoll, wenn für diesen Fall die domänenartige Decklackschicht 202 noch mit einer zusätzlichen Schutzschicht überzogen ist, dass im Bereich der in Fig. 9 übertrieben dick eingezeichneten Domänengrenzen ein Eindringen von Flüssigkeiten wie z.B. Wasser vermieden oder erschwert wird.

Es ist auch möglich, anstelle der Kontaktierung über elektrisch leitfähige Elastomere die Kontaktierung über auflackierte, bzw. aufgedruckte elektrisch leitfähige Kamm- bzw. Fingerelektroden vorzunehmen, welche insbesondere auf der Decklackschicht angeordnet werden um die Korrosionsschutzeigenschaften der Primerschicht möglichst wenig zu beeinflussen. Die Finger der Elektroden können vorzugsweise einzeln über die Vorrichtung 902 zur Durchführung einer Impedanzmessung angesteuert werden. Auch dies führt zu Impedanz-Messergebnissen, welche dem Bereich des Schichtaufbaus zugeordnet werden können, welcher sich unterhalb des jeweilig verwendeten Fingers befindet.

Fig. 9 zeigt ein Korrosionsschutzsystem 1101, umfassend die bereits bezüglich Fig. 2 diskutierten Schichten. Die Metallfläche 200 ist durch die Schicht 100 der Korrosionsschutz-Zusammensetzung überzogen. Optional ist die Schicht 100 durch die Decklackschicht 202 überzogen und damit geschützt. Eine Polarisationsvorrichtung 1100 z.B. in Form einer Spannungsquelle, insbesondere eines Netzteils zur Bereitstellung von Gleichspannung, umfasst zwei Elektroden 1101 und 1102. Eine der Elektroden 1101 ist mit dem Material der zu schützenden Oberfläche 200 kontaktiert und die andere der Elektroden, in Fig. 10 mit Bezugzeichen 1102 gekennzeichnet, ist mit der Schicht 100 verbunden.

Ist die optionale Decklackschicht 202 ebenfalls elektrisch leitfähig, kann die Elektrode 1102 auch mit der Decklackschicht verbunden sein. Möglich ist auch, dass auf der Schicht 100 eine weitere elektrisch leitfähige Schicht vorhanden ist, wobei dann die Elektrode 1102 mit dieser Schicht elektrisch verbunden ist. Diese weitere elektrisch leitfähige Schicht wäre bei Vorhandensein der Schicht 202 zwischen der Schicht 100 und der Schicht 202 angeordnet.

Die Polarisationsvorrichtung 1100 wird nun so eingestellt, dass mittels der Elektroden die erste Schicht 100 positiv gegenüber der Oberfläche 200 des zu schützenden Materials polarisiert wird.

Fig. 10 zeigt ein Verfahren zur Beschichtung einer gegen Korrosion zu schützenden Oberfläche, wie z.B. der Oberfläche 200 der Fig. 2. Das Verfahren beginnt in Schritt 500 mit dem Dispergieren der ersten und zweiten Füllkomponente, also insbesondere der Nanoröhren, Graphen-Platelets und dem zur Herstellung der Polymermatrix zu verwendenden Polymer-Bindemittel. Das Polymer-Bindemittel kann z.B. ungesättigte Polyestern in einem Vinylmonomer zur Herstellung von ungesättigte Polyesterharzen, oder Bisphenol A oder andere Monomere zur Herstellung von Epoxidharzen aufweisen.

Das Dispergieren erfolgt vorzugsweise unter Energieeintrag z.B. durch Rühren und/oder durch Ultraschall. Beispielhaft findet das Dispergieren unter Anwesenheit von Lösungsmitteln wie Aceton und Butylacetat statt.

Je nach verwendetem Polymer-Bindemittel kann dieses kurz vor dem Applizieren (Schritt 502) mit dem zugehörigen Härter versehen werden, oder die dispergierte Mischung kann nach dem Applizieren in Schritt 502 z.B. mit UV-Licht oder Wärme bestrahlt werden. In jeden Fall erfolgt in Schritt 504 die entsprechende Aushärtung, wobei diese aus einer chemischen Reaktion mit dem Härter resultiert oder durch UV-Härtung oder durch Wärmeinduzierte Härtung. Im Ergebnis resultiert hieraus die Schicht der Korrosionsschutz-Zusammensetzung, oder auch "Korrosionsschutz-Zusammensetzung" genannt.

Bezugzeichenliste

| | |
|---|---|
| 100 | Korrosionsschutz-Zusammensetzung |
| 102 | Kohlenstoffplättchen |
| 104 | Nanostrukturkomponente |
| 106 | Polymermatrix |
| 200 | zu schützendes Material |
| 202 | Decklackschicht |
| 204 | Partikel einer aktiven Korrosionsschutzkomponente |
| 300 | freigelegte Stelle |
| 302 | Bereich |
| 304 | Klebestreifen |
| 900 | Elektrode |
| 901 | Korrosionsüberwachungssystem |
| 902 | Vorrichtung zur frequenzabhängigen Bestimmung der Impedanz |
| 904 | Domäne |
| 1100 | Polarisationsvorrichtung |
| 1101 | Elektrode |
| 1102 | Elektrode |

**Patentansprüche**

1. Korrosionsschutz-Zusammensetzung (100) zur Beschichtung von Oberflächen, wobei die Zusammensetzung eine erste und eine zweite Füllkomponente aufweist, wobei bezogen auf die Gesamtzusammensetzung das Gewichtsverhältnis der ersten Füllkomponente und der zweiten Füllkomponente zwischen 0,4 und 1,2 liegt, wobei

   - die erste Füllkomponente Kohlenstoffplättchen (102) und eine Nanostrukturkomponente (104) aufweist, wobei die Nanostrukturkomponente (104) ausgewählt ist aus der Gruppe der Nanoröhren, Nanodrähte und Nanofasern,
   - die zweite Füllkomponente eine Polymermatrix (106) aufweist,
   - die Kohlenstoffplättchen (102) und/oder die Kohlenstoff- Nanostrukturkomponente (104) eine Silan-Funktionalisierung oder eine Polyether-Funktionalisierung aufweisen, wobei der Funktionalisierungsgrad 5 % bis 90 %, insbesondere 10% bis 60% und weiterhin bevorzugt 20 % bis 40 % beträgt.

**2.** Korrosionsschutz-Zusammensetzung (100) nach Anspruch 1, wobei

- das Gewichtsverhältnis der Nanostrukturkomponente (104) und den Kohlenstoffplättchen (102) zwischen 2 und 4, insbesondere zwischen größer als 3 und kleiner als 4 liegt und/oder
- das Gewichtsverhältnis der ersten Füllkomponente und der zweiten Füllkomponente zwischen 0,5 und 1 und insbesondere zwischen 0,65 und 0,8 liegt.

**3.** Korrosionsschutz-Zusammensetzung (100) nach Anspruch 1 oder 2, wobei es sich bei der Nanostrukturkomponente (104) um eine Kohlenstoff- Nanostrukturkomponente (104) handelt, wobei die Kohlenstoff- Nanostrukturkomponente (104) ausgewählt ist aus der Gruppe von ein- oder mehrwandigen Kohlenstoff-Nanoröhren, Kohlenstoff-Nanodrähten und Kohlenstoff-Nanofasern.

**4.** Korrosionsschutz-Zusammensetzung (100) nach einem der vorigen Ansprüche, wobei es sich bei den Kohlenstoffblättchen um Graphenplatelets handelt, wobei insbesondere deren durchschnittliche Dicke zwischen 1nm und 30nm oder zwischen 1nm und 15nm beträgt und/oder deren durchschnittlicher geometrischer Äquivalentdurchmesser zwischen $0,2\mu$m und $200\mu$m, insbesondere zwischen $0,5\mu$m und $20\mu$m oder $0,5\mu$m und $10\mu$m oder $0,5\mu$m und $5\mu$m beträgt.

**5.** Korrosionsschutz-Zusammensetzung (100) nach einem der vorigen Ansprüche, wobei das durchschnittliche Aspektverhältnis der Nanostrukturkomponente (104) zwischen 50 und 1500, insbesondere zwischen 50 und 500 oder 70-200 oder 100-200 liegt.

**6.** Korrosionsschutz-Zusammensetzung (100) nach einem der vorigen Ansprüche, wobei die zweite Füllkomponente Partikel (204) einer aktiven Korrosionsschutzkomponente umfasst, wobei der Anteil der Partikel zwischen 0,1 und 0,75 Gewichtsprozent bezogen auf die Gesamtzusammensetzung beträgt, insbesondere zwischen 0,2 und 0,6 und besonders bevorzugt zwischen 0,3 und 0,5 Gewichtsprozent bezogen auf die Gesamtzusammensetzung beträgt, wobei optional

- die aktive Korrosionsschutzkomponente ausgewählt ist aus der Gruppe von Phosphaten und Orthophosphaten und deren Derivaten, insbesondere aus der Gruppe der Phosphate und Orthophosphate und deren Derivate, welche auf Calcium, Zink und Strontium basieren, wobei optional die aktive Korrosionsschutzkomponente ausgewählt ist aus der Gruppe und deren Derivate von Calciumphosphat, Calciumorthophosphat, Calciumaluminiumorthophosphat, Calciummagnesiumorthophosphat, Strontiumaluminiumpolyphosphat, Zinkphosphat, Zinkorthophosphat, Zinkaluminiumpolyphosphat, Zinkmolybdenorthophosphat, Zinkaluminiumorthophosphat.

**7.** Korrosionsschutz-Zusammensetzung (100) nach Anspruch 1, wobei die Silan-komponente ausgewählt ist aus einer olefinisch reaktiven Silankomponente, insbesondere Vinyltrimethoxysilan, 3-Methacryloxypropyltrimethoxysilan, oder einer epoxid-funktionellen Silan-komponente, insbesondere 3-Glycidyloxypropyltrimethoxysilan und deren Mischungen.

**8.** Korrosionsschutz-Zusammensetzung (100) nach einem der vorigen Ansprüche, wobei die Polymermatrix (106) ein Reaktionsharz umfasst, insbesondere ein Reaktionsharz ausgewählt aus der Klasse der Epoxidharze, Polyesterharze und Acrylatharze.

**9.** Korrosionsschutz-Zusammensetzung (100) nach einem der vorigen Ansprüche, wobei der spezifische Oberflächenwiderstand der Korrosionsschutz-Zusammensetzung (100) zwischen $10^3$ und $10^6$ Ohm, insbesondere zwischen $10^4$ und $10^5$ Ohm beträgt.

**10.** Schichtaufbau umfassend eine erste Schicht und eine zweite Schicht (202), wobei die erste Schicht die Korrosionsschutz-Zusammensetzung (100) nach einem der vorigen Ansprüche aufweist und es sich bei der zweiten Schicht um eine Decklackschicht handelt, wobei optional

- die erste Schicht eine Schichtdicke zwischen $5\mu$m und $60\mu$m, insbesondere zwischen $8\ \mu$m und $50\mu$m und weiterhin bevorzugt zwischen $15\mu$m und $40\mu$m aufweist und /oder
- die zweite Schicht (202) eine Schichtdicke zwischen $10\mu$m und $300\mu$m, insbesondere zwischen $20\mu$m und $200\mu$m und weiterhin bevorzugt zwischen $30\mu$m und $100\mu$m aufweist.

**11.** Schichtaufbau nach Anspruch 10, wobei die zweite Schicht (202) elektrisch leitfähige Partikel aufweist, wobei der spezifische Oberflächenwiderstand der zweiten Schicht zwischen 1% und 30% des spezifischen Oberflächenwiderstandes der ersten Schicht beträgt, wobei optional die elektrisch leitfähigen Partikel anorganisch sind, insbesondere oxidische Partikel sind, insbesondere ausgewählt sind aus Indium-, Fluor- und Antimon enthaltenden Zinnoxiden oder deren Mischungen.

12. Verwendung der Korrosionsschutz-Zusammensetzung (100) nach einem der vorigen Ansprüche 1-9 und insbesondere des Schichtaufbaus nach einem der vorigen Ansprüche 10-11 zur Korrosionsschutz-Beschichtung einer Oberfläche.

13. Korrosionsüberwachungssystem (901) umfassend

   - den Schichtaufbau nach einem der vorigen Ansprüche 10-11,
   - ein zu überwachendes Material (200) mit einer Oberfläche, wobei die erste Schicht auf der Oberfläche aufgebracht ist,
   - eine Vorrichtung zur frequenzabhängigen Bestimmung der Impedanz mit mindestens einer Messelektrode und einer Gegenelektrode, wobei eine der beiden Elektroden (900) mit der zweiten Schicht oder der ersten Schicht, die andere der Elektroden mit dem Material kontaktiert ist, wobei weiterhin bevorzugt die Elektrode an der Oberfläche der zweiten Schicht über ein elektrisch leitfähiges Elastomer ohne Verwendung eines Elektrolyten realisiert wird,
   - eine Impedanz-Messeinheit und / oder Analysator zur Bestimmung der im Schichtaufbau auftretenden Korrosion und/oder Permeation aus der frequenzabhängig bestimmten Impedanz.

14. Korrosionsüberwachungssystem (901) nach Anspruch 13, wobei die Vorrichtung zur frequenzabhängigen Bestimmung der Impedanz eine Vielzahl der Messelektroden oder der Gegenelektroden aufweist und diese räumlich voneinander getrennt an verschiedenen Positionen der zweiten Schicht angeordnet sind, wobei die Auswerteeinheit zur Bestimmung der im Schichtaufbau auftretenden Korrosion aus der frequenzabhängig bestimmten Impedanz unter spezifischer Verwendung von einer oder mehrerer der Vielzahl der Elektroden (900) ausgebildet ist, wobei optional die zweite Schicht (202) in eine Vielzahl von elektrisch zueinander isolierten Domänen (904) aufgeteilt ist, wobei jeder der Domänen mit einer entsprechenden Elektrode der Vielzahl der Elektroden kontaktiert ist, wobei die Auswerteeinheit zur Bestimmung der im Schichtaufbau auftretenden Korrosion aus der frequenzabhängig bestimmten Impedanz spezifisch für die Domänen ausgebildet ist.

15. Korrosionsschutzsystem umfassend

   - den Schichtaufbau nach einem der vorigen Ansprüche 10-11 oder Korrosionsschutz-Zusammensetzung (100) nach einem der vorigen Ansprüche 1-9,
   - ein zu schützendes metallisches und elektrisch leitfähiges Material (200) mit einer Oberfläche, wobei die erste Schicht auf der Oberfläche aufgebracht ist,
   - eine Polarisationsvorrichtung (1100) mit einer ersten (1101) und einer zweiten (1102) Elektrode, wobei die erste Elektrode mit dem Material und die zweite Elektrode unmittelbar mit der ersten Schicht oder mittelbar mit der ersten Schicht über eine auf der der Oberfläche abgewandten Seite der ersten Schicht angeordneten leitfähigen Schicht kontaktiert ist, wobei die Polarisationsvorrichtung dazu ausgebildet ist, mittels der Elektroden die erste Schicht positiv gegenüber der Oberfläche zu polarisieren.

16. Verfahren zur Beschichtung einer gegen Korrosion zu schützenden Oberfläche, wobei das Verfahren umfasst:

   - Aufbringen der Korrosionsschutz-Zusammensetzung (100) nach einem der vorigen Ansprüche 1-9 als Dispersion im nicht ausgehärteten Zustand auf die zu schützende Oberfläche,
   - Aushärten der auf der Oberfläche befindlichen Korrosionsschutz-Zusammensetzung (100).

17. Verwendung des Korrosionsschutzsystems nach Anspruch 15 und/oder des Korrosionsüberwachungssystems (901) nach einem der Ansprüche 13-14 als allgemeines Sensorsystem, insbesondere als kapazitives Sensorsystem zur Anwendung als Näherungssensoren an Oberflächen von beschichteten Bauteilen und Werkstoffen aller Art.

**Claims**

1. A corrosion protection composition (100) for coating surfaces, the composition having a first and a second filling component, the weight ratio of the first filler component and the second filling component being between 0.4 and 1.2 based on the total composition,

- the first filling component having carbon platelets (102) and a nanostructure component (104), the nanostructure component (104) being selected from the group of nanotubes, nanowires and nanofibers,
- the second filling component having a polymer matrix (106),
- the carbon platelets (102) and/or the carbon nanostructure component (104) having a silane functionalization or a polyether functionalization, the degree of functionalization being 5% to 90%, particularly 10% to 60% and further preferably 20% to 40%.

2. The corrosion protection composition (100) according claim 1, wherein

- the weight ratio of the nanostructure component (104) and the carbon platelets (102) is between 2 and 4, particularly between greater than 3 and less than 4 and/or
- the weight ratio of the first filling component and the second filling component is between 0.5 and 1 and particularly between 0.65 and 0.8.

3. The corrosion protection composition (100) according to claim 1 or 2, wherein the nanostructural component (104) is a carbon nanostructural component (104), wherein the carbon nanostructural component (104) is selected from the group of single- or multi-walled carbon nanotubes, carbon nanowires and carbon nanofibers.

4. The corrosion protection composition (100) according to any one of the preceding claims, wherein the carbon platelets are graphene platelets, particularly their average thickness is between 1 nm and 30 nm or between 1 nm and 15 nm and/or their average geometric equivalent diameter between 0.2 $\mu$m and 200 $\mu$m, particularly between 0.5 $\mu$m and 20 $\mu$m or 0.5 $\mu$m and 10 $\mu$m or 0.5 $\mu$m and 5 $\mu$m.

5. The corrosion protection composition (100) according to any one of the preceding claims, wherein the average aspect ratio of the nanostructure component (104) is between 50 and 1500, particularly between 50 and 500 or 70-200 or 100-200.

6. The corrosion protection composition (100) according to any one of the preceding claims, wherein the second filling component comprises particles (204) of an active corrosion protection component, wherein the proportion of the particles is between 0.1 and 0.75 percent by weight based on the total composition, particularly is between 0.2 and 0.6 and particularly preferably between 0.3 and 0.5 percent by weight based on the total composition, wherein optionally
- the active corrosion protection component is selected from the group of phosphates and orthophosphates and their derivatives, particularly from the group of phosphates and orthophosphates and their derivatives, which are based on calcium, zinc and strontium, wherein the active corrosion protection component is optionally selected from the group and their derivatives of calcium phosphate, calcium orthophosphate, calcium aluminum orthophosphate, calcium magnesium orthophosphate, strontium aluminum polyphosphate, zinc phosphate, zinc orthophosphate, zinc aluminum polyphosphate, zinc molybdenum orthophosphate, zinc aluminum orthophosphate.

7. The corrosion protection composition (100) according to claim 1, wherein the silane component is selected from an olefinically reactive silane component, particularly vinyltrimethoxysilane, 3-methacryloxypropyltrimethoxysilane, or an epoxy-functional silane component, particularly 3-glycidyloxypropyltrimethoxysilane and mixtures thereof.

8. The corrosion protection composition (100) according to any one of the preceding claims, wherein the polymer matrix (106) comprises a reaction resin, particularly a reaction resin selected from the class of epoxy resins, polyester resins and acrylate resins.

9. The corrosion protection composition (100) according to any one of the preceding claims, wherein the specific surface resistance of the corrosion protection composition (100) is between $10^3$ and $10^6$ ohms, particularly between $10^4$ and $10^5$ ohms.

10. A layer structure comprising a first layer and a second layer (202), the first layer having the corrosion protection composition (100) according to any one of the preceding claims and the second layer being a topcoat layer, optionally

- the first layer having a layer thickness between 5 $\mu$m and 60 $\mu$m, particularly between 8 $\mu$m and 50 $\mu$m and

further preferably between 15 $\mu$m and 40 $\mu$m and/or
- the second layer (202) having a layer thickness between 10 $\mu$m and 300 $\mu$m, particularly between 20 $\mu$m and 200 $\mu$m and further preferably between 30 $\mu$m and 100 $\mu$m.

11. The layer structure according to claim 10, wherein the second layer (202) has electrically conductive particles, wherein the specific surface resistance of the second layer is between 1% and 30% of the specific surface resistance of the first layer, wherein the electrically conductive particles are optionally inorganic, particularly are oxidic particles, particularly selected from tin oxides containing indium, fluorine and antimony or mixtures thereof.

12. A use of the corrosion protection composition (100) according to any one of the preceding claims 1-9 and particularly of the layer structure according to any one of the preceding claims 10-11 for the corrosion protection coating of a surface.

13. A corrosion monitoring system (901) comprising

- the layer structure according to any one of the preceding claims 10-11,
- a material to be monitored (200) having a surface, the first layer being applied to the surface,
- a device for frequency-dependent determination of the impedance using at least one measuring electrode and a counter electrode, one of the two electrodes (900) being in contact with the second layer or the first layer and the other of the electrodes being in contact with the material, furthermore preferably the electrode on the the surface of the second layer being implemented via an electrically conductive elastomer without the use of an electrolyte,
- an impedance measuring unit and/or analyzer for determining the corrosion and/or permeation occurring in the layer structure from the impedance determined as a function of frequency.

14. The corrosion monitoring system (901) according to claim 13, wherein the device for the frequency-dependent determination of the impedance has a plurality of the measuring electrodes or the counter electrodes and these are arranged spatially separated from one another at different positions of the second layer, wherein the evaluation unit is designed for determining the corrosion occurring in the layer structure from the frequency-dependent impedance determined specifically using one or more of the plurality of electrodes (900), wherein the second layer (202) is optionally divided into a plurality of domains (904) that are electrically insulated from one another, wherein each of the domains is contacted with a corresponding electrode of the plurality of electrodes, wherein the evaluation unit for determining the corrosion occurring in the layer structure from the frequency-dependent impedance determined is designed specifically for the domains.

15. A corrosion protection system comprising

- the layer structure according to any one of the preceding claims 10-11 or corrosion protection composition (100) according to any one of the preceding claims 1-9,
- a metallic and electrically conductive material (200) to be protected having a surface, the first layer being applied to the surface,
- a polarization device (1100) having a first (1101) and a second (1102) electrode, wherein the first electrode being in direct contact with the material and the second electrode being in direct contact with the first layer or indirectly with the first layer via a conductive layer arranged on the side of the first layer facing away from the surface,

16. A method of coating a surface to be protected against corrosion, the method comprising:

- applying the corrosion protection composition (100) according to any one of the preceding claims 1-9 as a dispersion in the unhardened state on the surface to be protected,
- hardening the corrosion protection composition (100) located on the surface.

17. A use of the corrosion protection system according to claim 15 and/or the corrosion monitoring system (901) according to one of claims 13-14 as a general sensor system, particularly as a capacitive sensor system for use as proximity sensors on surfaces of coated components and materials of all kinds.

**Revendications**

1. Composition de protection anticorrosion (100) pour le revêtement de surfaces, où la composition présente un premier et un deuxième composant de charge, dans laquelle, par rapport à la composition totale, le rapport en poids du premier composant de charge sur le deuxième composant de charge se situe entre 0,4 et 1,2, dans laquelle

   - le premier composant de charge présente des plaquettes de carbone (102) et un composant nanostructuré (104), dans laquelle le composant nanostructuré (104) est choisi dans le groupe des nanotubes, des nanofils et des nanofibres,
   - le deuxième composant de charge présente une matrice de polymère (106),
   - les plaquettes de carbone (102) et/ou le composant nanostructuré de carbone (104) présentent une fonctionnalisation silane ou une fonctionnalisation polyéther, dans laquelle le degré de fonctionnalisation est de 5 % à 90 %, notamment de 10 % à 60 %, et plus préférentiellement de 20 % à 40 %.

2. Composition de protection anticorrosion (100) selon la revendication 1, dans laquelle

   - le rapport en poids du composant nanostructuré (104) et des plaquettes de carbone (102) se situe entre 2 et 4, notamment entre supérieur à 3 et inférieur à 4, et/ou
   - le rapport en poids du premier composant de charge et du deuxième composant de charge se situe entre 0,5 et 1 et notamment entre 0,65 et 0,8.

3. Composition de protection anticorrosion (100) selon la revendication 1 ou la revendication 2, dans laquelle, dans le cas du composant nanostructuré (104), il s'agit d'un composant nanostructuré de carbone (104), où le composant nanostructuré de carbone (104) est choisi dans le groupe des nanotubes de carbone à une ou plusieurs parois, des nanofils de carbone et des nanofibres de carbone.

4. Composition de protection anticorrosion (100) selon l'une des revendications précédentes, dans laquelle, dans le cas des plaquettes de carbone, il s'agit de plaquettes de graphène, dans laquelle, notamment leur épaisseur moyenne est entre 1 nm et 30 nm, ou entre 1 nm et 15 nm, et/ou leur diamètre équivalent géométrique moyen est entre 0,2 $\mu$m et 200 $\mu$m, notamment entre 0,5 $\mu$m et 20 $\mu$m, ou 0,5 $\mu$m et 10 $\mu$m, ou 0,5 $\mu$m et 5 $\mu$m.

5. Composition de protection anticorrosion (100) selon l'une des revendications précédentes, dans laquelle le rapport d'aspect moyen des composants nanostructurés (104) se situe entre 50 et 1500, notamment entre 50 et 500, ou 70 à 200, ou 100 à 200.

6. Composition de protection anticorrosion (100) selon l'une des revendications précédentes, dans laquelle le deuxième composant de charge comprend des particules (204) d'un composant de protection anticorrosion actif, où la proportion des particules se situe entre 0,1 et 0,75 pourcent en poids par rapport à la composition totale, notamment entre 0,2 et 0,6 et plus préférentiellement entre 0,3 et 0,5 pourcent en poids par rapport à la composition totale, dans laquelle, éventuellement
   - le composant de protection anticorrosion actif est choisi dans le groupe des phosphates et des orthophosphates et de leurs dérivés, notamment dans le groupe des phosphates et des orthophosphates et de leurs dérivés, lesquels sont basés sur du calcium, du zinc et du strontium, où, éventuellement, le composant de protection anticorrosion actif est choisi dans le groupe et de leurs dérivés du phosphate de calcium, de l'orthophosphate de calcium, de l'orthophosphate de calcium et d'aluminium, de l'orthophosphate de calcium et de magnésium, du polyphosphate de strontium et d'aluminium, du phosphate de zinc, de l'orthophosphate de zinc, du polyphosphate de zinc et d'aluminium, de l'orthophosphate de zinc et de molybdène, de l'orthophosphate de zinc et d'aluminium.

7. Composition de protection anticorrosion (100) selon la revendication 1, dans laquelle le composant de silane est choisi à partir d'un composant de silane réactif par les oléfines, notamment le vinyl triméthoxy silan 3-méthacrylo propyl triméthoxy silane, ou d'un composant silane à fonctionnalité époxyde, notamment le 3-glycidyloxy propyl triméthoxy silane, ou de leurs mélanges.

8. Composition de protection anticorrosion (100) selon l'une des revendications précédentes, dans laquelle la matrice de polymère (106) comprend une résine réactionnelle, notamment une résine réactionnelle choisie dans la classe des résines époxydes, des résines de polyesters et des résines d'acrylates.

9. Composition de protection anticorrosion (100) selon l'une des revendications précédentes, dans laquelle la résistance de surface spécifique de la composition de protection anticorrosion (100) est entre $10^3$ et $10^6$ Ohm, notamment entre $10^4$ et $10^5$ Ohm.

10. Structure en couches comprenant une première couche et une deuxième couche (202), dans laquelle la première couche présente la composition de protection anticorrosion (100) selon l'une des revendications précédentes et il s'agit, dans le cas de la deuxième couche, d'une couche de laque de recouvrement, dans laquelle, éventuellement

   - la première couche présente une épaisseur de couche entre 5 $\mu$m et 60 $\mu$m, notamment entre 8 $\mu$m et 50 $\mu$m, et plus préférentiellement entre 15 $\mu$m et 40 $\mu$m, et/ou
   - la deuxième couche (202 présente une épaisseur de couche entre 10 $\mu$m et 300 $\mu$m, notamment entre 20 $\mu$m et 200 $\mu$m, et plus préférentiellement entre 30 $\mu$m et 100 $\mu$m.

11. Structure en couches selon la revendication 10, dans laquelle la deuxième couche (202) présente des particules électriquement conductrices, dans laquelle la résistance de surface spécifique de la deuxième couche se situe entre 1 % et 30 % de la résistance de surface spécifique de la première couche, où, éventuellement, les particules électriquement conductrices sont inorganiques, notamment des particules oxydantes, notamment choisies parmi des oxydes d'indium, d'oxydes d'étain contenant du fluor et de l'antimoine, ou leurs mélanges.

12. Utilisation de la composition de protection anticorrosion (100) selon l'une des revendications précédentes 1 à 9 et notamment de la structure en couche selon l'une des revendications précédentes 10 et 11 pour le revêtement de protection anticorrosion d'une surface.

13. Système de surveillance anticorrosion (901) comprenant

   - la structure en couches selon l'une des revendications précédentes 10 et 11,
   - un matériau (200) à surveiller avec une surface, où la première couche est appliquée sur la surface,
   - un dispositif pour la détermination de l'impédance en fonction de la fréquence avec au moins une électrode de mesure et une contre-électrode, où une des deux électrodes (900) est en contact avec la deuxième couche ou la première couche, l'autre parmi les électrodes est en contact avec le matériau, où, plus préférentiellement, l'électrode est réalisée sur la surface de la deuxième couche par le biais d'un élastomère électriquement conducteur sans emploi d'un électrolyte,
   - une unité de mesure d'impédance et/ou un analyseur pour la détermination de la corrosion se produisant dans la structure en couches et/ou de la perméation à partir de l'impédance en fonction de la fréquence déterminée.

14. Système de surveillance anticorrosion (901) selon la revendication 13, dans lequel le dispositif pour la détermination de l'impédance en fonction de la fréquence présente une multiplicité d'électrodes de mesure ou de contre-électrodes et celles-ci sont disposées séparées dans l'espace à différentes positions de la deuxième couche, où l'unité d'exploitation est conçue pour la détermination de la corrosion se produisant dans la structure en couches à partir de l'impédance déterminée en fonction de la fréquence moyennant l'utilisation spécifique d'une ou de plusieurs électrodes de la multiplicité d'électrodes (900), où, éventuellement, la deuxième couche (202) est subdivisée en une multiplicité de domaines (904) électriquement isolés les uns par rapport aux autres, où chacun des domaines est en contact avec une électrode correspondante de la multiplicité d'électrodes, où l'unité d'exploitation est conçue pour la détermination de la corrosion se produisant dans la structure en couches à partir de l'impédance déterminée en fonction de la fréquence de manière spécifique pour les domaines.

15. Système de protection anticorrosion comprenant

   - la structure en couches selon l'une des revendications précédentes 10 et 11 ou la composition de protection anticorrosion (100) selon l'une des revendications précédentes 1 à 9,
   - un matériau (200) métallique protecteur et électriquement conducteur avec une surface, où la première couche est appliquée sur la surface,
   - un dispositif de polarisation (1100) avec une première (1101) et une deuxième (1102) électrode, où la première électrode est en contact avec le matériau et la deuxième électrode est en contact immédiat avec la première couche, ou en contact non immédiat avec la première couche par le biais le côté opposé à la surface de la couche conductrice disposée sur la première couche, où le dispositif de polarisation est conçu pour polariser la première couche de manière positive par rapport à la surface au moyen des électrodes.

16. Procédé de revêtement d'une surface à protéger contre la corrosion, le procédé comprenant :

- l'application de la composition de protection anticorrosion (100) selon l'une des revendications précédentes 1 à 9 sous forme d'une dispersion à l'état non durci sur la surface à protéger,
- le durcissement de la composition de protection anticorrosion (100) se trouvant sur la surface.

17. Utilisation du système de protection anticorrosion selon la revendication 15, et/ou du système de surveillance anticorrosion (901) selon l'une des revendications 13 et 14 en tant que système capteur général, notamment en tant que système capteur capacitif pour l'emploi de capteurs d'approche sur des surfaces de composants revêtues et de matériaux de tous types.

106    104

100

102

## Fig. 1

H$_2$O    OH$^-$

O$_2$

202
100
204    104

106
102

200

## Fig. 2

Fig. 3

Fig. 4

a) 3:1 CNT/Graphen-Mischung
ohne ZMP

24h Immersion/I

48h Immersion/I

72h Immersion/I

304

b) 3:1 CNT/Graphen-Mischung
+ 0,5% ZMP

24h Immersion/I

48h Immersion/I

72h Immersion/I

304

## Fig. 5

a) 3:1 CNT/Graphen
+ 0,5% ZMP

24h Immersion/I

48h Immersion/I

72h Immersion/I

III

304

b) 3:1 CNT/Graphen,
oberflächenmodifiziert + 0,5% ZMP

24h Immersion/I

48h Immersion/I

72h Immersion/I

304

## Fig. 6

a)

I

b)

Fig. 7

900 900 901

902

202

100

200

904 904 904 904

## Fig. 8

1102

1100 1101

202

100

200

## Fig. 9

| Dispergieren | 500 |
| Applizieren | 502 |
| Aushärten | 504 |
| Aufbringen Decklackschicht | 506 |

## Fig. 10

**EP 3 865 545 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1756236 B1
- EP 1337350 B2

- US 20140151596 A1